# EUROPEAN PATENT SPECIFICATION

(11) **EP 4 623 411 B1**
(45) Date of publication and mention of the grant of the patent: **25.11.2026**
(21) Application number: 23804840.9
(22) Date of filing: 05.10.2023
(51) Int. Cl.: G06T 7/55

(54) **SCALING FOR DEPTH ESTIMATION**
SKALIERUNG FÜR DIE TIEFENSCHÄTZUNG
MISE À L'ÉCHELLE POUR L'ESTIMATION DE LA PROFONDEUR

(30) Priority: 27.11.2022 US 202263428103 P; 04.10.2023 US 202318481050
(43) Date of publication of application: 01.10.2025
(73) Proprietor: Qualcomm Incorporated, San Diego, CA 92121-1714 (US)
(72) Inventor: CAI, Hong, San Diego, CA 92121 (US); ZHU, Yinhao, San Diego, CA 92121 (US); JEONG, Jisoo, San Diego, CA 92121 (US); SHI, Yunxiao, San Diego, CA 92121 (US); PORIKLI, Fatih, Murat, San Diego, CA 92121 (US)
(74) Representative: Carstens, Dirk Wilhelm
(86) International application number: PCT/US2023/076054
(87) International publication number: WO 2024/112458

(56) References cited:
- US-A1- 2022 335 638
- TINGHUI ZHOU ET AL: "Unsupervised Learning of Depth and Ego-Motion from Video", ARXIV.ORG, CORNELL UNIVERSITY LIBRARY, 201 OLIN LIBRARY CORNELL UNIVERSITY ITHACA, NY 14853, 25 April 2017 (2017-04-25), XP080765482, DOI: 10.1109/CVPR.2017.700
- HONG CAI ET AL: "X-Distill: Improving Self-Supervised Monocular Depth via Cross-Task Distillation", ARXIV.ORG, CORNELL UNIVERSITY LIBRARY, 201 OLIN LIBRARY CORNELL UNIVERSITY ITHACA, NY 14853, 24 October 2021 (2021-10-24), XP091080875
- ZHAO CHAOQIANG ET AL: "Monocular depth estimation based on deep learning: An overview", SCIENCE CHINA TECHNOLOGICAL SCIENCES, SCIENCE CHINA PRESS, HEIDELBERG, vol. 63, no. 9, 10 June 2020 (2020-06-10), pages 1612 - 1627, XP037238111, ISSN: 1674-7321, [retrieved on 20200610], DOI: 10.1007/S11431-020-1582-8

## Description

### FIELD

The present disclosure generally relates to processing sensor data (e.g., images, radar data, light detection and ranging (LIDAR) data, etc.). For example, aspects of the present disclosure are related to performing scaling for depth estimation, such as using sparse depth values from a camera tracking engine to scale self-supervised monocular depth data to obtain scale-correct (e.g., metric-correct) depth prediction values.

### BACKGROUND

Many devices and systems allow characteristics of a scene to be captured based on sensor data, such as images (or frames) of a scene, video data (including multiple frames) of the scene, radar data, etc. For example, a camera or a device including a camera can capture a sequence of frames of a scene (e.g., a video of a scene). In some cases, the sequence of frames can be processed for performing one or more functions, can be output for display, can be output for processing and/or consumption by other devices, among other uses.

For applications such as mixed reality (XR) autonomous driving, camera image/video processing and robots, depth perception is valuable. However, self-supervised monocular (single) camera systems output scale-ambiguous depth prediction values. Attention is drawn to document US 2022/335638 A1 which relates to a method for depth estimation including receiving image data from a sensor system, generating, by a neural network, a first depth map based on the image data, where the first depth map has a first scale, obtaining depth estimates associated with the image data, and transforming the first depth map to a second depth map using the depth estimates, where the second depth map has a second scale. Further attention is drawn to document TINGHUI ZHOU ET AL: "Unsupervised Learning of Depth and Ego-Motion from Video", ARXIV.ORG, CORNELL UNIVERSITY LIBRARY , 201 OLIN ITHACA, NY 14853, 25 April 2017, DOI:10.1109jCVPR.2017.700.

### BRIEF SUMMARY

The present invention is defined by the appended independent claims. Further embodiments of the present invention are defined by the appended dependent claims. In some examples, techniques are described for scaling depth prediction data that has an ambiguous scale in which the depth prediction data is generated from a trained depth network such as a self-supervised monocular depth network. According to at least one illustrative example, a method is provided for processing image data. The method includes: determining, using a trained machine learning system, a predicted depth map for an image, the predicted depth map including a respective predicted depth value for each pixel of the image. The method can further include obtaining depth values for the image from a tracker configured to determine the depth values based on one or more feature points between frames, the depth values including depth values for less than all pixels of the image and scaling the predicted depth map for the image using and the depth values.

**In** another example, an apparatus for processing image data is provided that includes at least one memory and at least one processor (e.g., implemented in circuitry) coupled to the at least one memory. The at least one processor is configured to: determine, using a trained machine learning system, a predicted depth map for an image, the predicted depth map including a respective predicted depth value for each pixel of the image. The at least one processor can be configured to: obtain depth values for the image from a tracker configured to determine the depth values based on one or more feature points between frames, the depth values including depth values for less than all pixels of the image and scale the predicted depth map for the image using and the depth values.

**In** another example, a non-transitory computer-readable medium is provided that has stored thereon instructions that, when executed by one or more processors (e.g., implemented in circuitry), cause the one or more processors to: determine, using a trained machine learning system, a predicted depth map for an image, the predicted depth map including a respective predicted depth value for each pixel of the image. The at least one processor can be caused to: obtain depth values for the image from a tracker configured to determine the depth values based on one or more feature points between frames, the depth values including depth values for less than all pixels of the image and scale the predicted depth map for the image using and the depth values.

In another example, an apparatus for processing image data is provided. The apparatus includes: means for determining, using a trained machine learning system, a predicted depth map for an image, the predicted depth map including a respective predicted depth value for each pixel of the image. The apparatus can further include means for obtaining depth values for the image from a tracker configured to determine the depth values based on one or more feature points between frames, the depth values including depth values for less than all pixels of the image and means for scaling the predicted depth map for the image using and the depth values.

In some aspects, one or more of the apparatuses described herein is or is part of a camera, a mobile device (e.g., a mobile telephone or so-called "smart phone" or other mobile device), a wearable device, an extended reality device (e.g., a virtual reality (VR) device, an augmented reality (AR) device, or a mixed reality (MR) device), a personal computer, a laptop computer, a server computer, or other device. In some aspects, an apparatus includes a camera or multiple cameras for capturing one or more images. In some aspects, the apparatus further includes a display for displaying one or more images, notifications, and/or other displayable data. In some aspects, the apparatus can include one or more sensors, which can be used for determining a location and/or pose of the apparatus, a state of the apparatuses, and/or for other purposes.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and aspects, will become more apparent upon referring to the following specification, claims, and accompanying drawings.

### BRIEF DESCRIPTION OF THE DRAWINGS

Illustrative aspects of the present application are described in detail below with reference to the following drawing figures:
FIG. 1A is a block diagram illustrating an architecture of an image capture and processing device, in accordance with some examples;
FIG. 1B is a block diagram illustrating a transition from a two-dimensional image to three-dimensional or depth prediction data, in accordance with some examples;
FIG. 2A illustrates an example architecture of a neural network that may be used in accordance with some aspects of the present disclosure;
FIG. 2B is a block diagram illustrating an ML engine, in accordance with aspects of the present disclosure;
FIG. 2C is a block diagram illustrating a self-supervised training of monocular depth estimation, in accordance with aspects of the present disclosure;
FIG. 3A illustrates an example workflow for training a depth model based on a depth-to-segmentation model, in accordance with some examples;
FIG. 3B illustrates an example workflow for inference using a trained depth model, in accordance with some examples;
FIG. 3C illustrates an example workflow for training a depth model based on photometric Loss, in accordance with some examples;
FIG. 3D illustrates an example workflow for training a depth model based on ground-truth maps, in accordance with some examples;
FIG. 4 is an example frame captured by a SLAM system, in accordance with some aspects;
FIG. 5 is a diagram illustrating an example of a hybrid system 500 for detecting features (e.g., keypoints or feature points) and generating descriptors for the detected features, in accordance with some aspects;
FIG. 6 is a flow diagram illustrating an example of a process for processing image data, in accordance with some examples of the present disclosure;
FIG. 7 illustrates is a flow diagram related to using depth values (e.g., sparse depth values) to perform post-hoc scaling of scale ambiguous depth prediction data, in accordance with some examples of the present disclosure;
FIG. 8 illustrates a flow diagram of an example method of performing image processing, in accordance with some examples of the present disclosure; and
FIG. 9 is a block diagram illustrating an example of a computing system for implementing certain aspects described herein.

### DETAILED DESCRIPTION

Certain aspects of this disclosure are provided below. Some of these aspects may be applied independently and some of them may be applied in combination as would be apparent to those of skill in the art. In the following description, for the purposes of explanation, specific details are set forth in order to provide a thorough understanding of aspects of the application. However, it will be apparent that various aspects may be practiced without these specific details. The figures and description are not intended to be restrictive.

The ensuing description provides example aspects only, and is not intended to limit the scope, applicability, or configuration of the disclosure. Rather, the ensuing description of the example aspects will provide those skilled in the art with an enabling description for implementing an example aspect. It should be understood that various changes may be made in the function and arrangement of elements without departing from the scope of the application as set forth in the appended claims

As described above, devices and systems can determine or capture characteristics of a scene based on sensor data associated with the scene. The sensor data can include images (or frames) of a scene, video data (including multiple frames) of the scene, radar data, LIDAR data, any combination thereof and/or other data.

For example, an image capture device (e.g., a camera) is a device that receives light and captures image frames, such as still images or video frames, using an image sensor. The terms "image," "image frame," "video frame," and "frame" are used interchangeably herein. An image capture device typically includes at least one lens that receives light from a scene and bends the light toward an image sensor of the image capture device. The light received by the lens passes through an aperture controlled by one or more control mechanisms and is received by the image sensor. The one or more control mechanisms can control exposure, focus, and/or zoom based on information from the image sensor and/or based on information from an image processor (e.g., a host or application process and/or an image signal processor). In some examples, the one or more control mechanisms include a motor or other control mechanism that moves a lens of an image capture device to a target lens position.

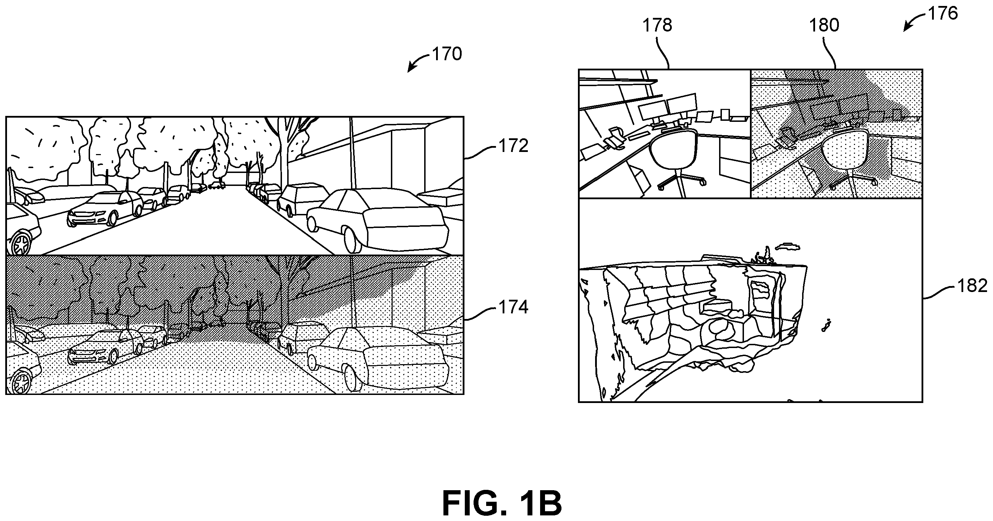

Performing depth estimation can be a fundamental problem in three-dimensional (3D) applications. For example, a system may use depth estimation to convert two-dimensional (2D) image captures into 3D space. Many systems and applications (e.g., extended reality (XR) systems, autonomous driving systems, camera image/video processing systems, robotic systems, etc.) can benefit from such 2D-to-3D conversion. Monocular estimation (estimation using images from a single camera) involves estimating the distance of each pixel from the camera given an image captured by the single camera. FIG. 1B discussed below illustrates monocular depth estimation on several images.

Self-supervised learning can involve using recorded videos as training data for a neural network. For example, a neural network configured to estimate depth from images (referred to as a depth network) can be trained using self-supervised learning/training. In some case, self-supervised training techniques can be used to train a depth network instead of supervised training techniques (which utilize ground truth data) because it can be difficult to obtain ground truth on the data (e.g., by having humans manually label many images for improved training). For instance, there are limitations to collecting large-scale ground truth depth annotations. In some cases, to collect accurate depth ground truth data, expensive sensors (e.g., LIDAR) and laborious data collection efforts may be required, which can make it difficult to scale the collection of data.

One problem with using self-supervision is that a depth network trained with self-supervision can only output relative depth maps. For instance, the relative depth maps appear to be correct in a relative sense (e.g., a table in the foreground of a scene appears to be in front of a person in the background of the scene), but the depth values are not in a specific standard measuring scale, such as meters or feet. In some cases, a depth network trained using self-supervised learning may use a structure-to-motion equation that defines how two frames (or images) relate to each other and how to transform the pixels from one frame to another. In one example, a specific point on a person (e.g., a pixel corresponding to a tip of the person's nose) can move from a first frame to a second frame. The depth value of the pixel as it changes from frame to frame can be converted from the first position in the first frame to a second position in the second frame. The system can use such converted positions to derive a loss function to train the self-supervised network.

The problem of relative depth maps arises when the depth value is multiplied by a certain factor. For example, as a factor is applied from one frame to the next, the system can only output relative depth values between frames. The depth values are relative to within a respective frame itself or between frames, and not according to an independent system of measurement (e.g., a metric system). For example, the data from the algorithm might indicate that one pixel is a certain distance of units from another pixel in the same frame or has moved a certain number of units from one frame to the next. However, the system does not necessarily know what the "unit" equals in terms of a system of measurement (e.g., in inches or centimeters). The predicted depth values are only correct up to a multiplication factor.

Such relative depth maps are thus ambiguous with respect to scale. When depth maps are ambiguous with respect to scale, systems such as autonomous vehicles, XR systems, and other systems cannot directly use the depth values because they cannot project the pixels into real-world units (and thus learn how far an object is from the system, such as the vehicle, XR system, etc.).

Systems, apparatuses, processes (also referred to as methods), and computer-readable media (collectively referred to as "systems and techniques") are described herein that provide a solution to the problem of scale-ambiguous depth prediction output from a trained depth network as described above. For instance, as described in more detail herein, one example approach includes a system that uses six degrees of freedom (6DoF) data to generate depth values. In some cases, the depth values can include sparse depth values, where not every pixel in a corresponding image or frame is represented by a depth value (e.g., depth values are generated for less than all pixels of the image or frame). The system can then perform post-hoc scaling of scale-ambiguous depth prediction data to generate scale-correct (e.g., metric-correct) depth prediction values.

Degrees of freedom (DoF) refer to the number of basic ways a rigid object can move through three-dimensional (3D) space. In some examples, six different DoF of an object can be tracked. The six DoF can include three translational DoF corresponding to translational movement along three perpendicular axes, which can be referred to as x, y, and z axes. The six DoF can also include three rotational DoF corresponding to rotational movement around the three axes, which can be referred to as pitch, yaw, and roll. Some devices (e.g., XR devices, such as virtual reality (VR) or augmented reality (AR) headsets or head-mounted displays (HMDs), mobile devices, vehicles or systems of vehicles, robotics devices, etc.) can track some or all of these degrees of freedom. For instance, a 3DoF tracker (e.g., of an XR headset) can track the three rotational DoF. A 6DoF tracker (e.g., of an XR headset) can track all six DoF.

In some cases, tracking (e.g., 6 DoF tracking) can be used to perform localization and mapping functions. For example, visual simultaneous localization and mapping (VSLAM) is a computational geometry technique used in devices with cameras, such as XR devices (e.g., VR HMDs, AR headsets, etc.), robotics devices or systems, mobile handsets, vehicles or systems of vehicles, etc. In VSLAM, a device can construct and update a map of an unknown environment based on frames captured by the device's camera. The device can keep track of the device's pose (e.g., a pose of an image sensor of the device, such as a camera pose, which may be determined using 6DOF tracking) within the environment (e.g., location and/or orientation) as the device updates the map. For example, the device can be activated in a particular room of a building and can move throughout the interior of the building, capturing image frames. The device can map the environment, and keep track of its location in the environment, based on tracking where different objects in the environment appear in different image frames. Other type of sensor data other than image frames may also be used for VSLAM, such as radar and/or LIDAR data.

In the context of systems that track movement through an environment (e.g., XR systems, robotics systems, vehicles such as automated vehicles, VSLAM systems, among others), degrees of freedom can refer to which of the six degrees of freedom the system is capable of tracking. As noted above, 3DoF tracking systems generally track the three rotational DoF (e.g., pitch, yaw, and roll). A 3DoF headset, for instance, can track the user of the headset turning their head left or right, tilting their head up or down, and/or tilting their head to the left or right. 6DoF systems can track the three translational DoF as well as the three rotational DoF. Thus, a 6DoF headset, for instance, and can track the user moving forward, backward, laterally, and/or vertically in addition to tracking the three rotational DoF.

To perform the localization and mapping functions, a device (e.g., XR devices, mobile devices, etc.) can perform feature analysis (e.g., extraction, tracking, etc.) and other complex functions. For example, camera keypoint features (also referred to as feature points) can be used as non-semantic features to improve localization and mapping robustness. Keypoint features can include distinctive features extracted from one or more images, such as points associated with a corner of a table, an edge of a street sign, etc. The depth values (e.g., sparse depth values) noted previously can be obtained in connection with these features points. The depth values can then be used to generate scale-correct (e.g., metric-correct) depth prediction values as disclosed herein.

In some cases, machine learning based systems (e.g., using a deep learning neural network) can be used to detect features (e.g., keypoints) for localization and mapping and generate descriptors for the detected features. However, it can be difficult to obtain ground truth and annotations (or labels) for training a machine learning based feature (e.g., keypoint or feature point) detector and descriptor generator.

As noted previously, systems and techniques are described herein for providing a post-hoc scaling of scale-ambiguous depth prediction values using depth values (e.g., sparse depth values) from a camera tracker. For example, the system can include a non-machine learning based feature detector or camera tracker and a machine learning based depth network. In some aspects, the feature detector (e.g., a feature point detector) can be based on, for example, computer vision algorithms, and a machine learning system (e.g., a deep learning neural network) can be used to generate descriptors for the detected feature points or keypoints and thus the depth values (e.g., sparse depth values). The descriptors (also referred as feature descriptors) can be generated at least in part by generating a description of a feature as detected or depicted in input sensor data (e.g., a local image patch extracted around the feature in an image). In some cases, a feature descriptor can describe a feature as a feature vector or as a collection of feature vectors. The depth values (e.g., sparse depth values) associated with a feature descriptor can be used for post-hoc scaling to ultimately generate scale-correct (e.g., metric-correct) depth prediction values.

The systems and techniques described herein provide various advantages. For example, by performing post-hoc scaling of depth predictions, the systems and techniques can allow a system to identify accurate distances between the system and other objects in a scene. In one illustrative example, a benefit of obtaining a correct scaling of the depth values is in autonomous driving where the proper known distance of an object from the camera is valuable for avoiding collisions.

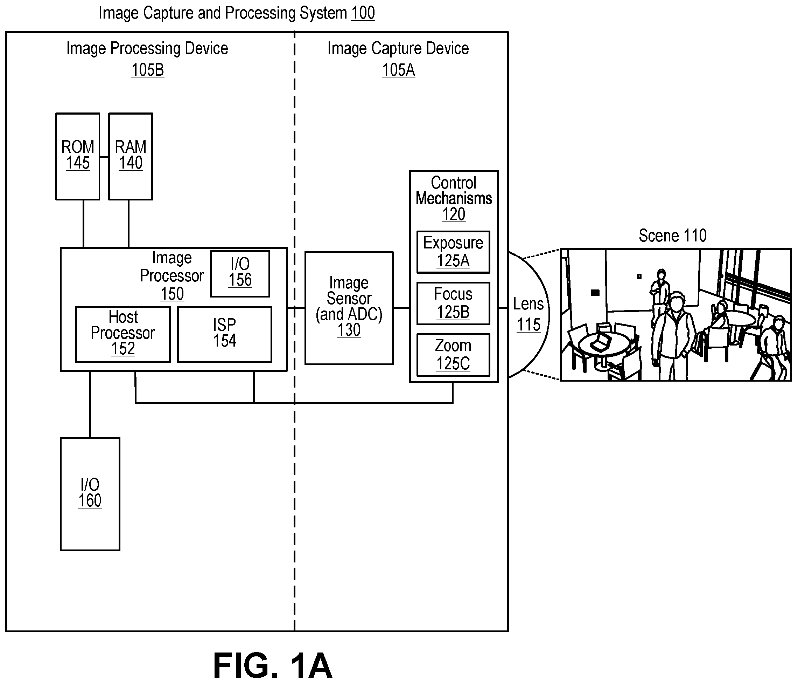

Various aspects of the application will be described with respect to the figures. FIG. 1A is a block diagram illustrating an architecture of an image capture and processing system 100. The image capture and processing system 100 includes various components that are used to capture and process images of scenes (e.g., an image of a scene 110). The image capture and processing system 100 can capture standalone images (or photographs) and/or can capture videos that include multiple images (or video frames) in a particular sequence. A lens 115 of the image capture and processing system 100 faces a scene 110 and receives light from the scene 110. The lens 115 bends the light toward the image sensor 130. The light received by the lens 115 passes through an aperture controlled by one or more control mechanisms 120 and is received by an image sensor 130.

The one or more control mechanisms 120 may control exposure, focus, and/or zoom based on information from the image sensor 130 and/or based on information from the image processor 150. The one or more control mechanisms 120 may include multiple mechanisms and components; for instance, the one or more control mechanisms 120 may include one or more exposure control mechanisms 125A, one or more focus control mechanisms 125B, and/or one or more zoom control mechanisms 125C. The one or more control mechanisms 120 may also include additional control mechanisms besides those that are illustrated, such as control mechanisms controlling analog gain, flash, HDR, depth of field, and/or other image capture properties.

The one or more focus control mechanisms 125B of the one or more control mechanisms 120 can obtain a focus setting. In some examples, the one or more focus control mechanisms 125B store the focus setting in a memory register. Based on the focus setting, the one or more focus control mechanisms 125B can adjust the position of the lens 115 relative to the position of the image sensor 130. For example, based on the focus setting, the one or more focus control mechanisms 125B can move the lens 115 closer to the image sensor 130 or farther from the image sensor 130 by actuating a motor or servo (or other lens mechanism), thereby adjusting focus. In some cases, additional lenses may be included in the image capture and processing system 100, such as one or more microlenses over each photodiode of the image sensor 130, which each bend the light received from the lens 115 toward the corresponding photodiode before the light reaches the photodiode. The focus setting may be determined via contrast detection autofocus (CDAF), phase detection autofocus (PDAF), hybrid autofocus (HAF), or some combination thereof. The focus setting may be determined using the one or more control mechanism 120, the image sensor 130, and/or the image processor 150. The focus setting may be referred to as an image capture setting and/or an image processing setting.

The one or more exposure control mechanisms 125A of the one or more control mechanisms 120 can obtain an exposure setting. In some cases, the one or more exposure control mechanisms 125A stores the exposure setting in a memory register. Based on this exposure setting, the one or more exposure control mechanisms 125A can control a size of the aperture (e.g., aperture size or f/stop), a duration of time for which the aperture is open (e.g., exposure time or shutter speed), a sensitivity of the image sensor 130 (e.g., ISO speed or film speed), analog gain applied by the image sensor 130, or any combination thereof. The exposure setting may be referred to as an image capture setting and/or an image processing setting.

The one or more zoom control mechanisms 125C of the one or more control mechanisms 120 can obtain a zoom setting. In some examples, the one or more zoom control mechanisms 125C stores the zoom setting in a memory register. Based on the zoom setting, the one or more zoom control mechanisms 125C can control a focal length of an assembly of lens elements (lens assembly) that includes the lens 115 and one or more additional lenses. For example, the one or more zoom control mechanisms 125C can control the focal length of the lens assembly by actuating one or more motors or servos (or other lens mechanism) to move one or more of the lenses relative to one another. The zoom setting may be referred to as an image capture setting and/or an image processing setting. In some examples, the lens assembly may include a parfocal zoom lens or a varifocal zoom lens. In some examples, the lens assembly may include a focusing lens (which can be lens 115 in some cases) that receives the light from the scene 110 first, with the light then passing through an afocal zoom system between the focusing lens (e.g., lens 115) and the image sensor 130 before the light reaches the image sensor 130. The afocal zoom system may, in some cases, include two positive (e.g., converging, convex) lenses of equal or similar focal length (e.g., within a threshold difference of one another) with a negative (e.g., diverging, concave) lens between them. In some cases, the one or more zoom control mechanisms 125C moves one or more of the lenses in the afocal zoom system, such as the negative lens and one or both of the positive lenses.

The image sensor 130 includes one or more arrays of photodiodes or other photosensitive elements. Each photodiode measures an amount of light that eventually corresponds to a particular pixel in the image produced by the image sensor 130. In some cases, different photodiodes may be covered by different color filters, and may thus measure light matching the color of the filter covering the photodiode. For instance, Bayer color filters include red color filters, blue color filters, and green color filters, with each pixel of the image generated based on red light data from at least one photodiode covered in a red color filter, blue light data from at least one photodiode covered in a blue color filter, and green light data from at least one photodiode covered in a green color filter. Other types of color filters may use yellow, magenta, and/or cyan (also referred to as "emerald") color filters instead of or in addition to red, blue, and/or green color filters. Some image sensors (e.g., image sensor 130) may lack color filters altogether, and may instead use different photodiodes throughout the pixel array (in some cases vertically stacked). The different photodiodes throughout the pixel array can have different spectral sensitivity curves, therefore responding to different wavelengths of light. Monochrome image sensors may also lack color filters and therefore lack color depth.

In some cases, the image sensor 130 may alternately or additionally include opaque and/or reflective masks that block light from reaching certain photodiodes, or portions of certain photodiodes, at certain times and/or from certain angles, which may be used for phase detection autofocus (PDAF). The image sensor 130 may also include an analog gain amplifier to amplify the analog signals output by the photodiodes and/or an analog to digital converter (ADC) to convert the analog signals output of the photodiodes (and/or amplified by the analog gain amplifier) into digital signals. In some cases, certain components or functions discussed with respect to one or more of the one or more control mechanisms 120 may be included instead or additionally in the image sensor 130. The image sensor 130 may be a charge-coupled device (CCD) sensor, an electron-multiplying CCD (EMCCD) sensor, an active-pixel sensor (APS), a complimentary metal-oxide semiconductor (CMOS), an N-type metal-oxide semiconductor (NMOS), a hybrid CCD/CMOS sensor (e.g., sCMOS), or some other combination thereof.

The image processor 150 may include one or more processors, such as one or more image signal processors (ISPs) (including ISP 154), one or more host processors (including host processor 152), and/or one or more of any other type of processor 910 discussed with respect to the computing system 900. The host processor 152 can be a digital signal processor (DSP) and/or other type of processor. In some implementations, the image processor 150 is a single integrated circuit or chip (e.g., referred to as a system-on-chip or SoC) that includes the host processor 152 and the ISP 154. In some cases, the chip can also include one or more input/output ports (e.g., input/output (I/O) ports 156), central processing units (CPUs), graphics processing units (GPUs), broadband modems (e.g., 3G, 4G or LTE, 5G, etc.), memory, connectivity components (e.g., Bluetooth^{™}, Global Positioning System (GPS), etc.), any combination thereof, and/or other components. The I/O ports 156 can include any suitable input/output ports or interface according to one or more protocol or specification, such as an Inter-Integrated Circuit 2 (I2C) interface, an Inter-Integrated Circuit 3 (I3C) interface, a Serial Peripheral Interface (SPI) interface, a serial General Purpose Input/Output (GPIO) interface, a Mobile Industry Processor Interface (MIPI) (such as a MIPI CSI-2 physical (PHY) layer port or interface, an Advanced High-performance Bus (AHB) bus, any combination thereof, and/or other input/output port. In one illustrative example, the host processor 152 can communicate with the image sensor 130 using an I2C port, and the ISP 154 can communicate with the image sensor 130 using an MIPI port.

The image processor 150 may perform a number of tasks, such as de-mosaicing, color space conversion, image frame downsampling, pixel interpolation, automatic exposure (AE) control, automatic gain control (AGC), CDAF, PDAF, automatic white balance, merging of image frames to form an HDR image, image recognition, object recognition, feature recognition, receipt of inputs, managing outputs, managing memory, or some combination thereof. The image processor 150 may store image frames and/or processed images in random access memory (RAM) 140/1620, read-only memory (ROM) 145/1625, a cache, a memory unit, another storage device, or some combination thereof.

Various input/output (I/O) devices 160 may be connected to the image processor 150. The I/O devices 160 can include a display screen, a keyboard, a keypad, a touchscreen, a trackpad, a touch-sensitive surface, a printer, any other output devices 935, any other input devices 945, or some combination thereof. In some cases, a caption may be input into the image processing device 105B through a physical keyboard or keypad of the I/O devices 160, or through a virtual keyboard or keypad of a touchscreen of the I/O devices 160. The I/O ports 156 may include one or more ports, jacks, or other connectors that enable a wired connection between the image capture and processing system 100 and one or more peripheral devices, over which the image capture and processing system 100 may receive data from the one or more peripheral device and/or transmit data to the one or more peripheral devices. The I/O ports 156 may include one or more wireless transceivers that enable a wireless connection between the image capture and processing system 100 and one or more peripheral devices, over which the image capture and processing system 100 may receive data from the one or more peripheral device and/or transmit data to the one or more peripheral devices. The peripheral devices may include any of the previously-discussed types of I/O devices 160 and may themselves be considered I/O devices 160 once they are coupled to the ports, jacks, wireless transceivers, or other wired and/or wireless connectors.

In some cases, the image capture and processing system 100 may be a single device. In some cases, the image capture and processing system 100 may be two or more separate devices, including an image capture device 105A (e.g., a camera) and an image processing device 105B (e.g., a computing device coupled to the camera). In some implementations, the image capture device 105A and the image processing device 105B may be coupled together, for example via one or more wires, cables, or other electrical connectors, and/or wirelessly via one or more wireless transceivers. In some implementations, the image capture device 105A and the image processing device 105B may be disconnected from one another.

As shown in FIG. 1A, a vertical dashed line divides the image capture and processing system 100 of FIG. 1A into two portions that represent the image capture device 105A and the image processing device 105B, respectively. The image capture device 105A includes the lens 115, the one or more control mechanisms 120, and the image sensor 130. The image processing device 105B includes the image processor 150 (including the ISP 154 and the host processor 152), the RAM 140, the ROM 145, and the I/O 160. In some cases, certain components illustrated in the image capture device 105A, such as the ISP 154 and/or the host processor 152, may be included in the image capture device 105A.

The image capture and processing system 100 can include an electronic device, such as a mobile or stationary telephone handset (e.g., smartphone, cellular telephone, or the like), a desktop computer, a laptop or notebook computer, a tablet computer, a set-top box, a television, a camera, a display device, a digital media player, a video gaming console, a video streaming device, an Internet Protocol (IP) camera, or any other suitable electronic device. In some examples, the image capture and processing system 100 can include one or more wireless transceivers for wireless communications, such as cellular network communications, 802.11 wi-fi communications, wireless local area network (WLAN) communications, or some combination thereof. In some implementations, the image capture device 105A and the image processing device 105B can be different devices. For instance, the image capture device 105A can include a camera device and the image processing device 105B can include a computing device, such as a mobile handset, a desktop computer, or other computing device.

While the image capture and processing system 100 is shown to include certain components, one of ordinary skill will appreciate that the image capture and processing system 100 can include more components than those shown in FIG. 1A. The components of the image capture and processing system 100 can include software, hardware, or one or more combinations of software and hardware. For example, in some implementations, the components of the image capture and processing system 100 can include and/or can be implemented using electronic circuits or other electronic hardware, which can include one or more programmable electronic circuits (e.g., microprocessors, GPUs, DSPs, CPUs, and/or other suitable electronic circuits), and/or can include and/or be implemented using computer software, firmware, or any combination thereof, to perform the various operations described herein. The software and/or firmware can include one or more instructions stored on a computer-readable storage medium and executable by one or more processors of the electronic device implementing the image capture and processing system 100.

FIG. 1B illustrates a first set of images 170 in which an original image 172 is processed, for example, by the image capture and processing device 100 of FIG. 1A, and a depth prediction or depth map 174 is generated. Another set of images 176 shows an original image 178 and a depth map 180 including a mapping of the depth of the objects in the image 182.

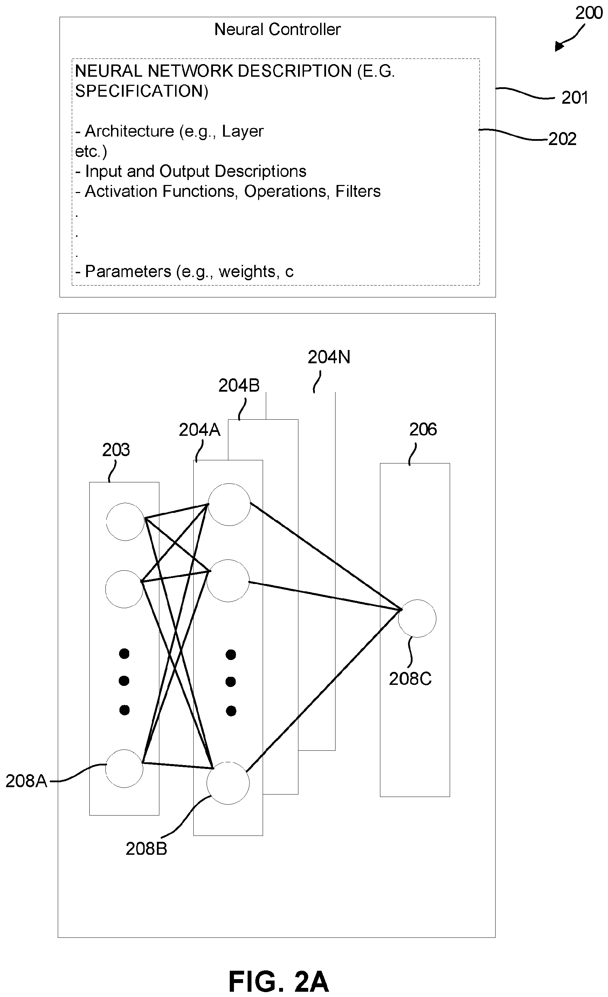

As part of the processing of images, a neural network or machine learning model may be used to generate data about the image. FIG. 2A illustrates an example architecture of a neural network 200 that may be used in accordance with some aspects of the present disclosure. The example architecture of the neural network 200 may be defined by an example neural network description 202 in neural controller 201. The neural network 200 is an example of a machine learning model that can be deployed and implemented on any device such as an autonomous vehicle or XR system. The neural network 200 can be a feedforward neural network or any other known or to-be-developed neural network or machine learning model.

The neural network description 202 can include a full specification of the neural network 200, including the neural architecture shown in FIG. 2A. For example, the neural network description 202 can include a description or specification of architecture of the neural network 200 (e.g., the layers, layer interconnections, number of nodes in each layer, etc.); an input and output description which indicates how the input and output are formed or processed; an indication of the activation functions in the neural network, the operations or filters in the neural network, etc.; neural network parameters such as weights, biases, etc.; and so forth.

The neural network 200 can reflect the neural architecture defined in the neural network description 202. The neural network 200 can include any suitable neural or deep learning type of network. In some cases, the neural network 200 can include a feed-forward neural network. In other cases, the neural network 200 can include a recurrent neural network, which can have loops that allow information to be carried across nodes while reading in input. The neural network 200 can include any other suitable neural network or machine learning model. One example includes a convolutional neural network (CNN), which includes an input layer and an output layer, with multiple hidden layers between the input and out layers. The hidden layers of a CNN include a series of hidden layers as described below, such as convolutional, nonlinear, pooling (for downsampling), and fully connected layers. In other examples, the neural network 200 can represent any other neural or deep learning network, such as an autoencoder, a deep belief nets (DBNs), a recurrent neural network (RNN), a generative-adversarial network (GAN), etc.

In the non-limiting example of FIG. 2A, the neural network 200 includes an input layer 203, which can receive one or more sets of input data. The input data can be any type of data (e.g., image data, video data, network parameter data, user data, etc.). The neural network 200 can include hidden layers 204A through 204N (collectively "204" hereinafter). The hidden layers 204 can include n number of hidden layers, where n is an integer greater than or equal to one. The n number of hidden layers can include as many layers as needed for a desired processing outcome and/or rendering intent. In one illustrative example, any one of the hidden layers 204 can include data representing one or more of the data provided at the input layer 203. The neural network 200 further includes an output layer 206 that provides an output resulting from the processing performed by hidden layers 204. The output layer 206 can provide output data based on the input data.

**In** the example of FIG. 2A, the neural network 200 is a multi-layer neural network of interconnected nodes. Each node can represent a piece of information. Information associated with the nodes is shared among the different layers and each layer retains information as information is processed. Information can be exchanged between the nodes through node-to-node interconnections between the various layers. The nodes of the input layer 203 can activate a set of nodes in the first hidden layer 204A. For example, as shown, each input node of the input layer 203 is connected to each node of the first hidden layer 204A. The nodes of the hidden layer 204A can transform the information of each input node by applying activation functions to the information. The information derived from the transformation can then be passed to and can activate the nodes of the next hidden layer (e.g., 204B), which can perform their own designated functions. Example functions include convolutional, up-sampling, data transformation, pooling, and/or any other suitable functions. The output of hidden layer (e.g., 204B) can then activate nodes of the next hidden layer (e.g., 204N), and so on. The output of last hidden layer can activate one or more nodes of the output layer 206, at which point an output can be provided. In some cases, while nodes (e.g., nodes 208A, 208B, 208C) in the neural network 200 are shown as having multiple output lines, a node can have a single output and all lines shown as being output from a node can represent the same output value.

In some cases, each node or interconnection between nodes can have a weight that is a set of parameters derived from training the neural network 200. For example, an interconnection between nodes can represent a piece of information learned about the interconnected nodes. The interconnection can have a numeric weight that can be tuned (e.g., based on a training data set), allowing the neural network 200 to be adaptive to inputs and able to learn as more data is processed.

The neural network 200 can be pre-trained to process the features from the data in the input layer 203 using different hidden layers 204 in order to provide the output through the output layer 206. For example, in some cases, the neural network 200 can adjust weights of nodes using a training process called backpropagation. Backpropagation can include a forward pass, a loss function, a backward pass, and a weight update. The forward pass, loss function, backward pass, and parameter update can be performed for one training iteration. The process can be repeated for a certain number of iterations for each set of training data until the weights of the layers are accurately tuned (e.g., meet a configurable threshold determined based on experiments and/or empirical studies).

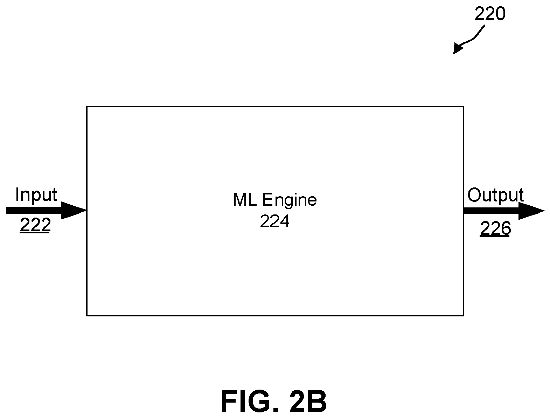

Increasingly ML (e.g., AI) algorithms (e.g., models) are being incorporated into a variety of technologies including for image processing. FIG. 2B is a block diagram 220 illustrating an ML engine 224 including input 222 and output 226, in accordance with aspects of the present disclosure. As an example, one or more devices that perform image processing may include the ML engine 224. In some cases, ML engine 224 may be similar to neural network 200. In this example, ML engine 224 includes three parts, input 222 to the ML engine 224, the ML engine 224, and the output 226 from the ML engine 224. The input 222 to the ML engine 224 may be data from which the ML engine 224 may use to make predictions or otherwise operate on.

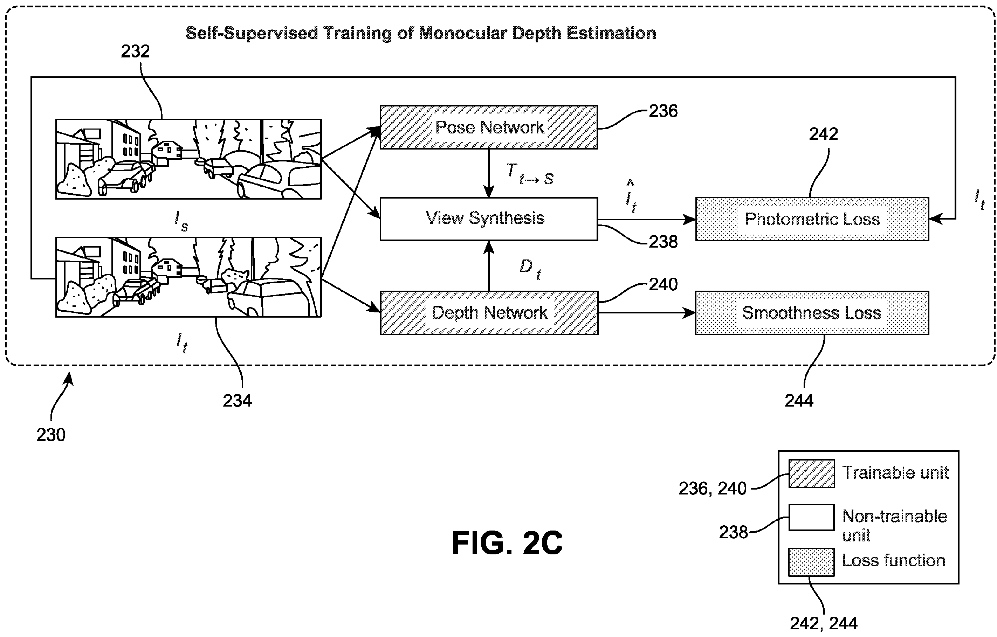

FIG. 2C illustrates a self-supervised training of a monocular depth estimation system 230. A first input image 232 (Iₛ) is a neighbor of a second input image 234 (Iₜ). A pixel pₜ is contained in It and a pixel pₛ is contained in Iₛ. Assume that these different pixels are different views of the same point of an object in the images. Then, pₜ and pₛ are related geometrically as follows: $d \left({p}_{s}\right) h \left({p}_{s}\right) = K \left({R}_{t \to s}{K}^{- 1}d\left({p}_{t}\right)h\left({p}_{t}\right)+{t}_{t \to s}\right) ,$
where h(p) = [h, w, 1] denotes the homogenous coordinates of a pixel p with h and w being its vertical and horizontal positions of the image, d(p) is the depth at p, $K ∈ {ℝ}^{3 \times 3}$ is the camera intrinsic matrix, and ${T}_{t \to s} = \left[{R}_{t \to s}\left|{t}_{t \to s}\right.\right] ∈ {ℝ}^{3 \times 4}$ is the 6DofF relative camera motion pose from t to s, with ${R}_{t \to s} ∈ {ℝ}^{3 \times 3}$ and ${t}_{t \to s} ∈ {ℝ}^{3 \times 1}$ being the rotation matrix and translation vector.

The system 230 can include a pose network 236 and a depth network 240 that are trainable units or components that can provide a pose output and a depth output to a view synthesis engine 238 which can be a non-trainable unit or component, which can output I'ₜ. A photometric loss component 242 can compare It and I't using a structural similarity index measure. The system 230 may also include a smoothness loss component 244 that can be used to prevent drastic variations in the predicted depth map. This may utilize a different kind of loss function to reduce the more drastic variations in the depth map. As noted above, the self-supervised training of the monocular depth estimation does not enable or provide absolute known units (such as metric units) for determining depth, but the output data is relative to objects in a frame or relative to movement between frames. Thus, the solution provided herein addresses this problem of the scale-ambiguous depth values output from the system 230.

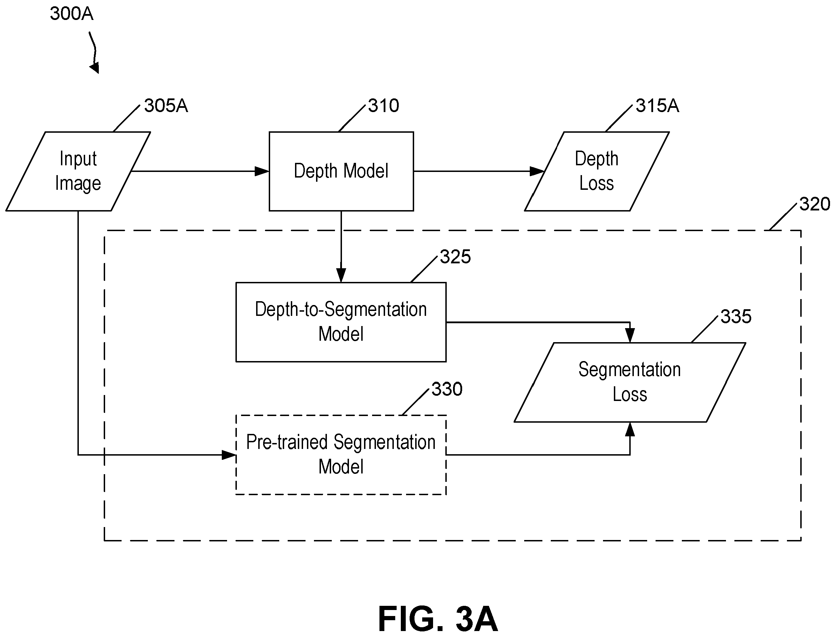

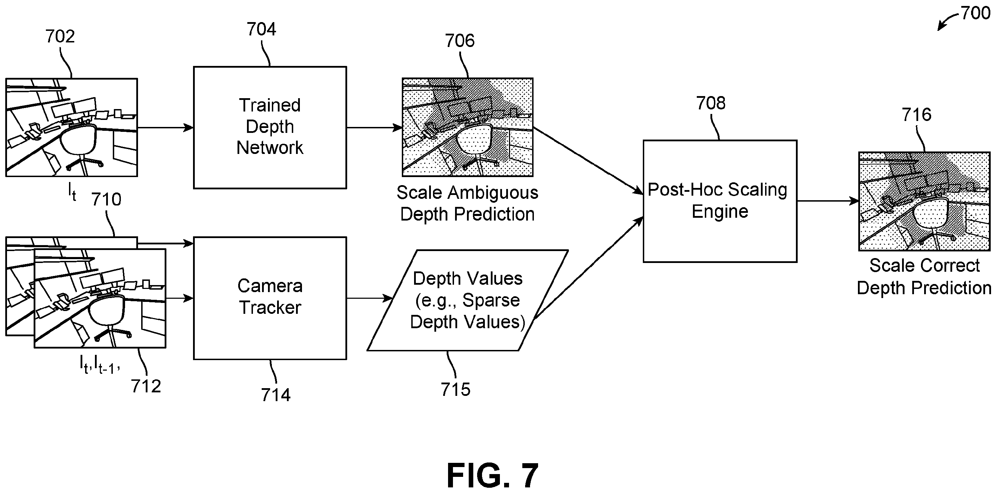

FIG. 3A depicts an example workflow 300A for training a depth model 310 and a depth-to-segmentation model 325. The depth model 310 may be applied for example, in the trained depth network 704 introduced below in FIG. 7.

In the workflow 300A, an input image 305A is processed using a depth model 310. The depth model 310 is generally a machine learning model configured to generate depth maps based on input images. As discussed above, the depth map may indicate, for each pixel in the input image 305A, the depth (e.g., the distance from the camera) of the corresponding object covered by the pixel. In some aspects, the depth model is a neural network.

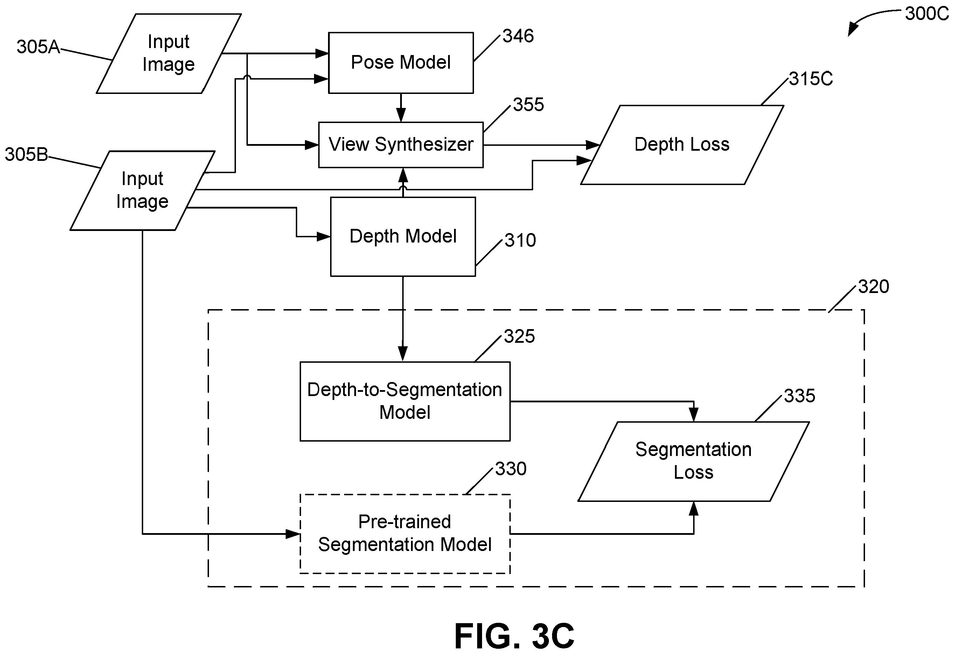

As illustrated, during the training process, the generated depth map can be used to compute a depth loss 315A. In some aspects, the generated depth map is used to generate a synthesized version of the input image 305A, which can be compared against the original input image 305A in order to generate the depth loss 315A, as discussed in more detail below with reference to FIG. 3A. In some cases, the generated depth map is compared against a ground-truth depth map in order to generate the depth loss 315A, as discussed in more detail below with reference to FIG. 3C. Generally, the depth loss 315A can be used to iteratively refine the depth model 310 (e.g., using backpropagation).

In the illustrated workflow 300A, a cross-task distillation module 320 is used to transfer semantic knowledge from a pre-trained segmentation model 330 to the depth model 310. That is, if the depth model 310 is denoted as f_{D} and the pre-trained semantic segmentation model is denoted as f_{S}, then the cross-task distillation module 320 enables transfer of the knowledge of the teacher model, f_{S}, to the student model, f_{D}. However, unlike conventional knowledge distillation where teacher and student networks are used for the same visual task, f_{D} and f_{S} are used for two different tasks and their outputs are not directly comparable. In other words, given an input, the system cannot directly measure the difference between the outputs of f_{D} (a depth map) and f_{S} (a segmentation map) in order to generate a loss needed to train f_{D}.

In the illustrated aspect, therefore, a depth-to-segmentation model 325 (which may be denoted h_{D2S}) is used. In an aspect, the depth-to-segmentation model 325 is a neural network. In some aspects, the depth-to-segmentation model 325 is a small neural network (e.g., with just two conventional convolution layers and one pointwise convolution layer, or with a pointwise convolutional layer preceded by zero to four convolution layers), enabling it to be trained efficiently and with minimal computational expenditure.

For example, in one aspect, the depth-to-segmentation model 325 consists of two 3 × 3 convolutional layers (or any number of convolutional layers), each followed by a BatchNorm layer and a ReLu layer, as well as a pointwise convolutional layer at the end which outputs the segmentation map. In some aspects, using a deeper network for the depth-to-segmentation model 325 may result in improved accuracy of the depth model 310, but these improvements are not as significant as those achieved using a smaller depth-to-segmentation model 325. Further, a larger or deeper depth-to-segmentation model 325 may take an outsized role in the learning, thereby weakening the knowledge flow to the depth model 310.

In the workflow 300A, the depth-to-segmentation model 325 receives the depth map generated by the depth model 310 and translates it to a semantic segmentation map. Stated differently, the depth-to-segmentation model 325 generates a segmentation map based on an input depth map.

Additionally, as illustrated, the pre-trained segmentation model 330 is used to generate a segmentation map based on the original input image 105. Although a pre-trained segmentation model 330 is depicted, in some aspects, the cross-task distillation module 320 can use a ground-truth segmentation map for the input image 305A (e.g., provided by a user), rather than processing the input image 305A using the pre-trained segmentation model 330 to generate one. As used herein, the segmentation map used to generate the segmentation loss 335 (which may be provided by a user or generated by the pre-trained segmentation model 330) may be referred to as a "ground-truth" segmentation map to reflect that it is used as a ground-truth in computing the loss, even though it may in fact be a psuedo ground-truth map generated by the trained model. As used herein, the term "ground-truth segmentation map" can include both true or actual segmentation maps (e.g., provided by a user), as well as psuedo or generated ground-truth segmentation maps (e.g., generated by the pre-trained segmentation model 330).

Given the segmentation map generated by the depth-to-segmentation model 325 (based on the predicted depth map generated by the depth model 310) and the segmentation map generated by the pre-trained segmentation model 330 (based on the input image 105), the system is able to construct a segmentation loss 335. This segmentation loss 335 can then be used to distill the semantic knowledge from f_{S} to f_{D}. In one aspect, this new segmentation loss 335 is defined using Equation 1 below, where 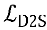 (·) is the segmentation loss 335. ${S}_{t}^{D}$ is the semantic segmentation map generated by the depth-to-segmentation model 325 based on the predicted depth map generated by the depth model 310 given input image 105. That is, ${S}_{t}^{D} = {h}_{D 2 S} \left({f}_{D}\left({I}_{t}\right)\right)$ , where It is the input image 105. Additionally, Sₜ is the semantic segmentation output generated by the pre-trained semantic segmentation model 330, 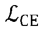 denotes cross-entropy loss, and H and W are the height and width of the input image 105. ${L}_{D 2 S} \left({S}_{t}^{D}, {S}_{t}\right) = {\sum }_{i = 1}^{H} {\sum }_{j = 1}^{W} \frac{{L}_{CE} \left({S}_{t}^{D}\left(i, j\right),{S}_{t}\left(i, j\right)\right)}{HW}$ (Eq. 1)

In the illustrated workflow 300A, the segmentation loss 335 can be used to allow the depth-to-segmentation model 325 to be jointly trained with the depth model 310. This makes it possible for the pre-trained segmentation model 330 to provide semantic supervision to the depth model 310, by backpropagating the segmentation loss 335 through the depth-to-segmentation model 325. That is, the segmentation loss 335 can be backpropagated through the depth-to-segmentation model 325 (e.g., generating gradients for each layer), and the resulting tensor or gradients output from the depth-to-segmentation model 325 can be backpropagated through the depth model 310.

Although the illustrated workflow 300A depicts a single input image 305A (suggesting stochastic gradient descent) for conceptual clarity, in aspects, the training workflow 300A may be used to provide training in batches of input images 105.

In some aspects, as discussed above, the semantic classes used by the pre-trained segmentation model 330 may be consolidated or grouped to enable improved training of the depth model 310. The semantic segmentation can often contain more fine-grained visual recognition information that is not present or realistic in depth maps. For example, road objects and sidewalk objects are typically treated as two different semantic classes, but depth maps generally do not contain such classification information as both road and sidewalk are on the ground plane and have similar depth variations. As a result, it is not necessary to differentiate them on the depth map. On the other hand, the depth map does contain the information for differentiating certain classes. For instance, a road participant (e.g., pedestrian, vehicle) can be easily separated from the background (e.g., road, building) given the different patterns of their depth values.

In some aspects, therefore, the semantic classes may be grouped or consolidated such that the semantic information is preserved while the unnecessary complexity is removed from the distillation. In one such aspect, the classes are consolidated to a first group for objects in the foreground (e.g., vehicles, pedestrians, signs, and the like) and a second group for objects in the background (e.g., buildings, the ground itself, and the like). In at least one aspect, the objects in the foreground are delineated into two subgroups based, for example, on their shapes. For example, the system may use a first group (or subgroup) for thin structures (e.g., traffic lights and signs, poles, and the like) and a second group (or subgroup) for broader shapes (such as people, vehicles, and the like).

Similarly, objects in the background may be split into a third group (or subgroup) and a fourth group (or subgroup), where the third group contains the background objects (e.g., buildings, vegetation, and the like) while the fourth group includes the ground (e.g., roads, sidewalks, and the like). This class consolidation, applied to the segmentation map generated by the pre-trained segmentation model 330, can improve the resulting accuracy of the depth model 310. In some aspects, this consolidation is performed based on a user-specified configuration (e.g., indicating which classes should be consolidated to a given group). In one aspect, consolidating the classes includes relabeling the segmentation map based on the groupings of classes. For example, if light poles and signs are consolidated to the same class, then they will be assigned the same value in the (new) segmentation map. The depth-to-segmentation model 325 is generally configured to output segmentation maps based on the consolidated classes.

As discussed above, the distillation approach only adds a small amount of computation to training, as the depth-to-segmentation model 325 can be small. Moreover, the segmentation maps from the teacher network (pre-trained segmentation model 330) need only be computed once for each training input image 105, and can thereafter be re-used as needed. This improves over existing systems that co-train a segmentation model alongside the depth model (which may require proccessing images with the segmentation model many times during training).

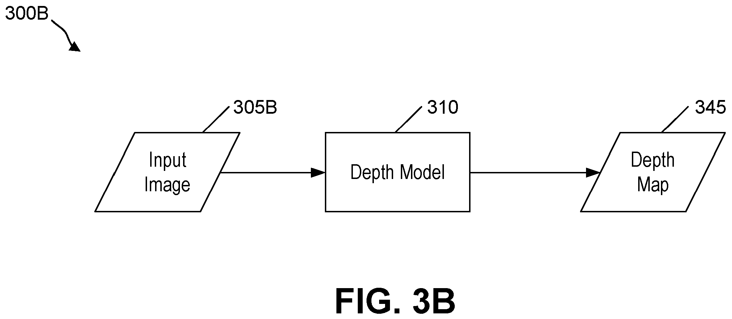

FIG. 3B depicts an example workflow 300B for inference using a trained depth model 310. This workflow 300B can be used for example for the trained depth network 704 of FIG. 7.

In the illustrated aspect, the depth model 310 has been trained using a cross-task distillation module, such as cross-task distillation module 320 discussed above with reference to FIG. 3A. That is, the depth model 310 may be trained based at least in part on a segmentation loss generated with the aid of a depth-to-segmentation model (such as depth-to-segmentation model 325, discussed above with reference to FIG. 3A). In this way, the depth model 310 learns segmentation knowledge that can enable significantly improved depth estimations.

Once the training is finished (e.g., determined based on termination criteria such as sufficient accuracy or otherwise determining that the model is sufficiently trained), the depth model 310 can run in a standalone manner, without requiring any extra computation of semantic information during inference. That is, input images 305B can be processed by the depth model 310 to generate accurate depth maps 345, without passing any data through the depth-to-segmentation model 325 or pre-trained segmentation model 330 of FIG. 3A. In some aspects, therefore, the cross-task distillation module 320 can be discarded after training. In some aspects, the depth-to-segmentation model 325 can be stored for use with future refinements or training.

In some aspects, during inferencing, however, only the depth model 310 is used. Because the depth model 310 is trained in a more semantic-aware manner using cross-task distillation, it exhibits superior accuracy as compared to existing systems. Further, because the workflow 300B does not use a separate segmentation network or depth-to-segmentation model during inferencing, the computational resources needed (e.g., power consumption, latency, memory footprint, number of operations, and the like) are significantly reduced as compared to existing systems.

FIG. 3C depicts an example workflow 300C for training a depth model using photometric loss and segmentation loss. The workflow 300C generally provides more detail for the computation of the depth loss 315A (shown as depth loss 315C in FIG. 3C), discussed above with reference to FIG. 3A. Specifically, the workflow 300C uses a self-supervised approach to enable computation of a depth loss 315C and training of the depth model 310 without the need for ground-truth depth maps. The example workflow 300C can be used for the trained depth network 704 of FIG. 7.

In the illustrated workflow 300C, input images 305A and 305B are neighboring (e.g., adjacent) or close (e.g., within a defined number of frames or timestamps) frames from a video. Both are provided to a pose model 346, which is configured to determine the relative camera motion between the input images 305A and 305B. Generally, the pose model 346 is a machine learning model (e.g., a neural network) that infers camera pose (e.g., locations and orientations in six-degrees of freedom) for input images.

For example, consider two neighboring or close video frames, It and Iₛ (e.g., input images 305A and 305B). Suppose that pixel pₜ ∈ Iₜ and pixel pₛ ∈ Iₛ are two different views of the same point of an object. In such a case, pₜ and pₛ are related geometrically as indicated in Equation 2 below, where h(p) = [h, w, 1] denotes the homogeneous coordinates of a pixel p with h and w being its vertical and horizontal positions on the image, d(p) is the depth at p, K is the camera intrinsic matrix, and T_{t→s} is the six-degree-of-freedom relative camera motion/pose from t to s. $d \left({p}_{s}\right) h \left({p}_{s}\right) = \left[K\left|0\right.\right] {T}_{t \to s} \left[\begin{matrix}{K}^{- 1} d \left({p}_{t}\right) h \left({p}_{t}\right) \\ 1\end{matrix}\right]$ (Eq. 2)

The determined pose, generated by the pose model 205, is provided to a view synthesizer 355. Additionally, the input image 305B can be provided to the depth model 310 to generate a predicted depth map for the image 305B. As depicted in the workflow 300C, this generated depth map is then provided to the view synthesizer 355.

Given the generated depth map of It (image 305B), which is output by the depth model 310 and may be denoted Dt, along with the relative camera pose from It (image 305B) to Iₛ (image 305A), which is output by the pose model 346, the view synthesizer 355 can synthesize It from Iₛ based on Equation 2, assuming that the points captured in It are also present in Iₛ. The synthesized version of the input image 305B (It) may be denoted as Îₜ.

As illustrated, by minimizing the difference between the synthesized image Îₜ and the actual image 305B (indicated by depth loss 315A), the system can train the pose model 346 and depth model 310. In some aspects, this depth loss 315A is referred to as a photometric loss (denoted 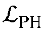 ), and may be defined using Equation 3 below, where where ||·||₁ denotes the 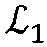 norm and SSIM is the Structural Similarity Index Measure. Note that 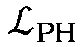 is computed in a per-pixel manner. ${L}_{PH} \left({I}_{t}, {\hat{I}}_{t}\right) = α {\left‖{I}_{t}-{Î}_{t}\right‖}_{1} + \left(1-α\right) \frac{1 - SSIM \left({I}_{t}, {Î}_{t}\right)}{2}$ (Eq. 3)

In some aspects, the system may further include a smoothness regularization or loss to prevent drastic variations in the predicted depth map. Additionally, in some aspects, not all the 3D points in It can be found in Iₛ (e.g., due to occlusion and objects (entirely or partially) moving out of the frame). Some objects can also be moving (e.g., cars), which is not considered in the geometric model of Equation 2. In one such aspect, in order to correctly measure the photometric loss and train the networks, the system can mask out the pixel points that violate the geometric model.

In the illustrated workflow 300C, the depth model 310 is also refined based on the segmentation loss 335 (propagated through the depth-to-segmentation model 325), as discussed above. In one aspect, the total loss ( 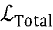 ) for the depth model 310 can therefore defined using Equation 4 below, where the self-supervised depth loss is computed over Nₛ scales, 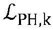 is the photometric loss for the k^{th} scale, λ_{SM,k} and 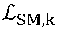 are the weight and loss for the smoothness regularization for the k^{th} scale, and λ_{D2S} is the weight of the cross-task distillation loss, 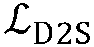 . ${L}_{Total} = {\sum }_{k = 1}^{{N}_{s}} {L}_{PH , k} + {\sum }_{k = 1}^{{N}_{s}} {λ}_{SM , k} {L}_{SM , k} + {λ}_{D 2 S} {L}_{D 2 S}$ (Eq. 4)

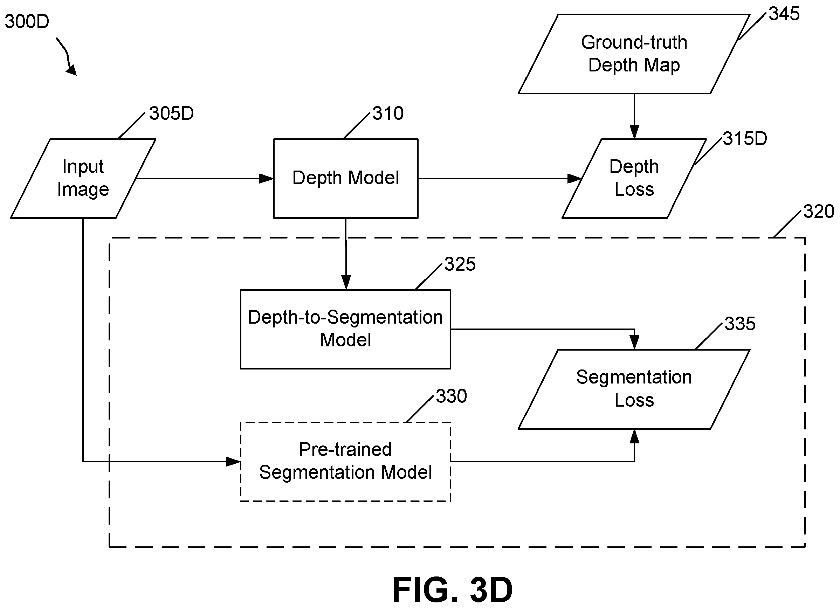

FIG. 3D depicts an example workflow 300D for training a depth model using ground-truth depth maps and segmentation loss. The workflow 300D generally provides more detail for the computation of the depth loss 315A, discussed above with reference to FIG. 3A. Specifically, the workflow 300D uses ground-truth depth maps 345 to compute the depth loss 315D. The workflow 300D can be used to train the trained depth network 704 of FIG. 7.

In the illustrated workflow 300D, a depth-to-segmentation model 325 can be used to compute a segmentation loss 335 which is used to refine the depth model 310, as discussed above with reference to FIG. 3A.

As further illustrated, for each input image 305D, a corresponding ground-truth depth map 345 is used to compute the depth loss 315D. For example, the system may use cross-entropy to compute the depth loss 315D loss based on the ground-truth depth map 345 and predicted depth map generated by the depth model 310. This depth loss 315D can then be used, along with the segmentation loss 335, the refine the depth model 310.

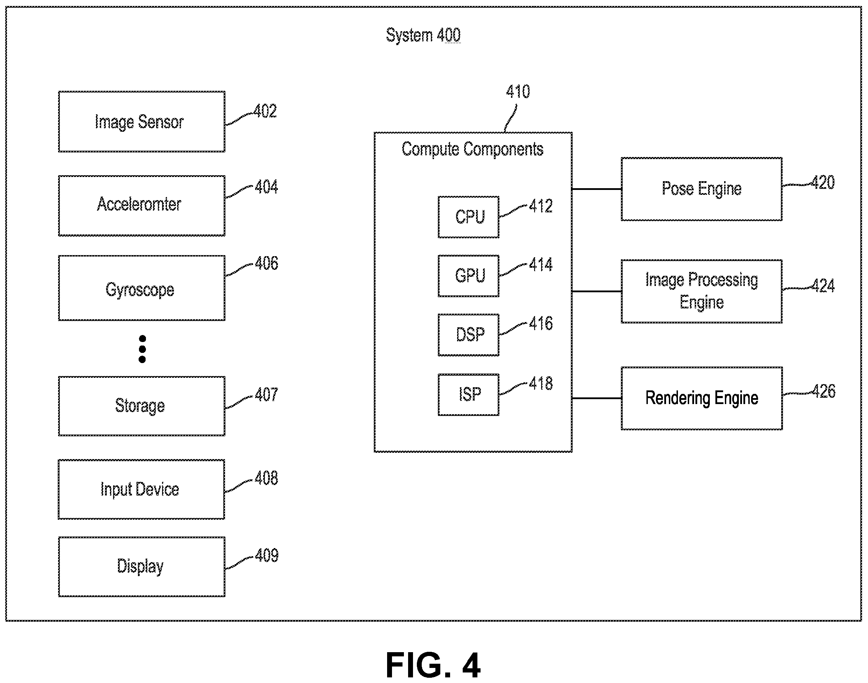

FIG. 4 is a diagram illustrating an architecture of an example system 400, in accordance with some aspects of the disclosure. The system 400 can be used in connection with the camera tracker 714 shown in FIG. 7.

In some cases, the system may be a tracking system without mapping functions such that the system produces features (e.g., sparse features) and may not include various mapping/localization engines/functions. The system 400 can be an XR system (e.g., running (or executing) XR applications and/or implementing XR operations), a system of a vehicle, a robotics system, or other type of system. The system 400 can perform tracking and localization, mapping of an environment in the physical world (e.g., a scene), and/or positioning and rendering of content on a display 409 (e.g., positioning and rendering of virtual content a screen, visible plane/region, and/or other display as part of an XR experience). For instance, the system 400 can generate a map (e.g., a three-dimensional (3D) map) of an environment in the physical world, track a pose (e.g., location and position) of the system 400 relative to the environment (e.g., relative to the 3D map of the environment), and/or determine a position and/or anchor point in a specific location(s) on the map of the environment. In one example, the system 400 can position and/or anchor virtual content in the specific location(s) on the map of the environment and can render virtual content on the display 409 such that the virtual content appears to be at a location in the environment corresponding to the specific location on the map of the scene where the virtual content is positioned and/or anchored. The display 409 can include a monitor, a glass, a screen, a lens, a projector, and/or other display mechanism. For example, in the context of an XR system, the display 409 can allow a user to see the real-world environment and also allows XR content to be overlaid, overlapped, blended with, or otherwise displayed thereon.

In this illustrative example, the system 400 includes one or more image sensors 402, an accelerometer 404, a gyroscope 406, storage 407, compute components 410, a pose engine 420, an image processing engine 424, and a rendering engine 426. It should be noted that the components 402-126 shown in FIG. 4 are non-limiting examples provided for illustrative and explanation purposes, and other examples can include more, less, or different components than those shown in FIG. 4. For example, in some cases, the system 400 can include one or more other sensors (e.g., one or more inertial measurement units (IMUs), radars, light detection and ranging (LIDAR) sensors, radio detection and ranging (RADAR) sensors, sound detection and ranging (SODAR) sensors, sound navigation and ranging (SONAR) sensors. audio sensors, etc.), one or more display devices, one more other processing engines, one or more other hardware components, and/or one or more other software and/or hardware components that are not shown in FIG. 4. While various components of the system 400, such as the image sensor 402, may be referenced in the singular form herein, it should be understood that the system 400 may include multiple of any component discussed herein (e.g., multiple image sensors 402).

The system 400 includes or is in communication with (wired or wirelessly) an input device 408. The input device 408 can include any suitable input device, such as a touchscreen, a pen or other pointer device, a keyboard, a mouse a button or key, a microphone for receiving voice commands, a gesture input device for receiving gesture commands, a video game controller, a steering wheel, a joystick, a set of buttons, a trackball, a remote control, any other input device 1645 discussed herein, or any combination thereof. In some cases, the image sensor 402 can capture images that can be processed for interpreting gesture commands.

In some implementations, the one or more image sensors 402, the accelerometer 404, the gyroscope 406, storage 407, compute components 410, pose engine 420, image processing engine 424, and rendering engine 426 can be part of the same computing device. For example, in some cases, the one or more image sensors 402, the accelerometer 404, the gyroscope 406, storage 407, compute components 410, pose engine 420, image processing engine 424, and rendering engine 426 can be integrated into a device or system, such as an HMD, XR glasses (e.g., AR glasses), a vehicle or system of a vehicle, smartphone, laptop, tablet computer, gaming system, and/or any other computing device. However, in some implementations, the one or more image sensors 402, the accelerometer 404, the gyroscope 406, storage 407, compute components 410, pose engine 420, image processing engine 424, and rendering engine 426 can be part of two or more separate computing devices. For example, in some cases, some of the components 402-426 can be part of, or implemented by, one computing device and the remaining components can be part of, or implemented by, one or more other computing devices.

The storage 407 can be any storage device(s) for storing data. Moreover, the storage 407 can store data from any of the components of the system 400. For example, the storage 407 can store data from the image sensor 402 (e.g., image or video data), data from the accelerometer 404 (e.g., measurements), data from the gyroscope 406 (e.g., measurements), data from the compute components 410 (e.g., processing parameters, preferences, virtual content, rendering content, scene maps, tracking and localization data, object detection data, privacy data, XR application data, face recognition data, occlusion data, etc.), data from the pose engine 420, data from the image processing engine 424, and/or data from the rendering engine 426 (e.g., output frames). In some examples, the storage 407 can include a buffer for storing frames for processing by the compute components 410.

The one or more compute components 410 can include a central processing unit (CPU) 412, a graphics processing unit (GPU) 414, a digital signal processor (DSP) 416, an image signal processor (ISP) 418, and/or other processor (e.g., a neural processing unit (NPU) implementing one or more trained neural networks). The compute components 410 can perform various operations such as image enhancement, computer vision, graphics rendering, tracking, localization, pose estimation, mapping, content anchoring, content rendering, image and/or video processing, sensor processing, recognition (e.g., text recognition, facial recognition, object recognition, feature recognition, tracking or pattern recognition, scene recognition, occlusion detection, etc.), trained machine learning operations, filtering, and/or any of the various operations described herein. In some examples, the compute components 410 can implement (e.g., control, operate, etc.) the pose engine 420, the image processing engine 424, and the rendering engine 426. In other examples, the compute components 410 can also implement one or more other processing engines.

The image sensor 402 can include any image and/or video sensors or capturing devices. In some examples, the image sensor 402 can be part of a multiple-camera assembly, such as a dual-camera assembly. The image sensor 402 can capture image and/or video content (e.g., raw image and/or video data), which can then be processed by the compute components 410, the pose engine 420, the image processing engine 424, and/or the rendering engine 426 as described herein. In some examples, the image sensors 402 may include an image capture and processing system 100, an image capture device 105A, an image processing device 105B, or a combination thereof.

In some examples, the image sensor 402 can capture image data and can generate images (also referred to as frames) based on the image data and/or can provide the image data or frames to the pose engine 420, the image processing engine 424, and/or the rendering engine 426 for processing. An image or frame can include a video frame of a video sequence or a still image. An image or frame can include a pixel array representing a scene. For example, an image can be a red-green-blue (RGB) image having red, green, and blue color components per pixel; a luma, chroma-red, chroma-blue (YCbCr) image having a luma component and two chroma (color) components (chroma-red and chroma-blue) per pixel; or any other suitable type of color or monochrome image.

In some cases, the image sensor 402 (and/or other camera of the system 400) can be configured to also capture depth information. For example, in some implementations, the image sensor 402 (and/or other camera) can include an RGB-depth (RGB-D) camera. In some cases, the system 400 can include one or more depth sensors (not shown) that are separate from the image sensor 402 (and/or other camera) and that can capture depth information. For instance, such a depth sensor can obtain depth information independently from the image sensor 402. In some examples, a depth sensor can be physically installed in the same general location as the image sensor 402, but may operate at a different frequency or frame rate from the image sensor 402. In some examples, a depth sensor can take the form of a light source that can project a structured or textured light pattern, which may include one or more narrow bands of light, onto one or more objects in a scene. Depth information can then be obtained by exploiting geometrical distortions of the projected pattern caused by the surface shape of the object. In one example, depth information may be obtained from stereo sensors such as a combination of an infra-red structured light projector and an infra-red camera registered to a camera (e.g., an RGB camera).

The system 400 can also include other sensors in its one or more sensors. The one or more sensors can include one or more accelerometers (e.g., accelerometer 404), one or more gyroscopes (e.g., gyroscope 406), and/or other sensors. The one or more sensors can provide velocity, orientation, and/or other position-related information to the compute components 410. For example, the accelerometer 404 can detect acceleration by the system 400 and can generate acceleration measurements based on the detected acceleration. In some cases, the accelerometer 404 can provide one or more translational vectors (e.g., up/down, left/right, forward/back) that can be used for determining a position or pose of the system 400. The gyroscope 406 can detect and measure the orientation and angular velocity of the system 400. For example, the gyroscope 406 can be used to measure the pitch, roll, and yaw of the system 400. In some cases, the gyroscope 406 can provide one or more rotational vectors (e.g., pitch, yaw, roll). In some examples, the image sensor 402 and/or the pose engine 420 can use measurements obtained by the accelerometer 404 (e.g., one or more translational vectors) and/or the gyroscope 406 (e.g., one or more rotational vectors) to calculate the pose of the system 400. As previously noted, in other examples, the system 400 can also include other sensors, such as an inertial measurement unit (IMU), a magnetometer, a gaze and/or eye tracking sensor, a machine vision sensor, a smart scene sensor, a speech recognition sensor, an impact sensor, a shock sensor, a position sensor, a tilt sensor, etc.

As noted above, in some cases, the one or more sensors can include at least one IMU. An IMU is an electronic device that measures the specific force, angular rate, and/or the orientation of the system 400, using a combination of one or more accelerometers, one or more gyroscopes, and/or one or more magnetometers. In some examples, the one or more sensors can output measured information associated with the capture of an image captured by the image sensor 402 (and/or other camera of the system 400) and/or depth information obtained using one or more depth sensors of the system 400.

The output of one or more sensors (e.g., the accelerometer 404, the gyroscope 406, one or more IMUs, and/or other sensors) can be used by the pose engine 420 to determine a pose of the system 400 (also referred to as the head pose) and/or the pose of the image sensor 402 (or other camera of the system 400). In some cases, the pose of the system 400 and the pose of the image sensor 402 (or other camera) can be the same. The pose of image sensor 402 refers to the position and orientation of the image sensor 402 relative to a frame of reference (e.g., with respect to the object). In some implementations, the camera pose can be determined for 6-Degrees Of Freedom (6DoF), which refers to three translational components (e.g., which can be given by X (horizontal), Y (vertical), and Z (depth) coordinates relative to a frame of reference, such as the image plane) and three angular components (e.g. roll, pitch, and yaw relative to the same frame of reference). In some implementations, the camera pose can be determined for 3-Degrees Of Freedom (3DoF), which refers to the three angular components (e.g. roll, pitch, and yaw).

In some cases, a device tracker (not shown) can use the measurements from the one or more sensors and image data from the image sensor 402 to track a pose (e.g., a 6DoF pose) of the system 400. For example, the device tracker can fuse visual data (e.g., using a visual tracking solution) from the image data with inertial data from the measurements to determine a position and motion of the system 400 relative to the physical world (e.g., the scene) and a map of the physical world. As described below, in some examples, when tracking the pose of the system 400, the device tracker can generate a three-dimensional (3D) map of the scene (e.g., the real world) and/or generate updates for a 3D map of the scene. The 3D map updates can include, for example and without limitation, new or updated features and/or feature or landmark points associated with the scene and/or the 3D map of the scene, localization updates identifying or updating a position of the system 400 within the scene and the 3D map of the scene, etc. The 3D map can provide a digital representation of a scene in the real/physical world. In some examples, the 3D map can anchor location-based objects and/or content to real-world coordinates and/or objects. The system 400 can use a mapped scene (e.g., a scene in the physical world represented by, and/or associated with, a 3D map) to merge the physical and virtual worlds and/or merge virtual content or objects with the physical environment.

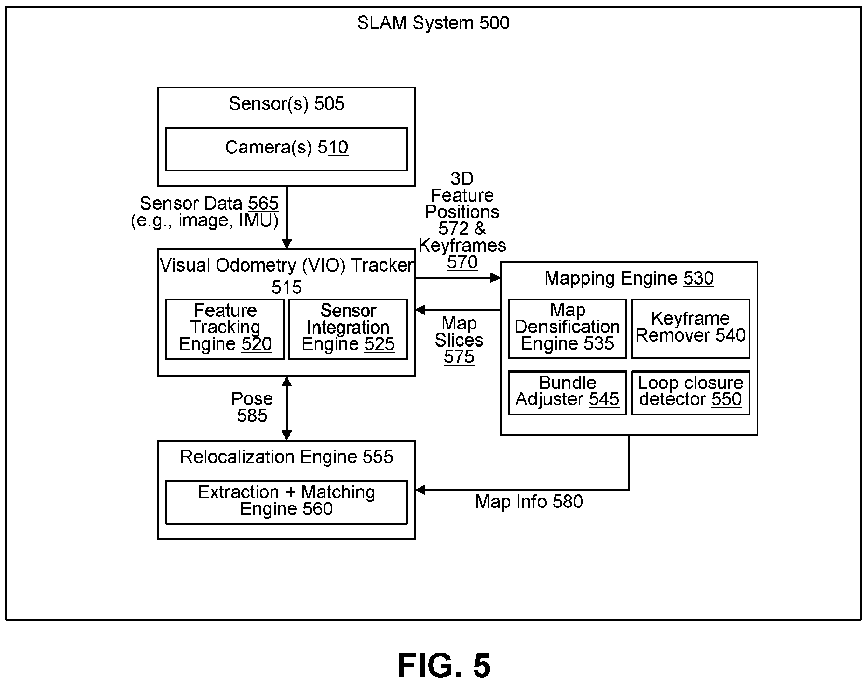

In some aspects, the pose (also referred to as a camera pose) of image sensor 402 and/or the system 400 as a whole can be determined and/or tracked by the compute components 410 using a visual tracking solution based on images captured by the image sensor 402 (and/or other camera of the system 400). For instance, in some examples, the compute components 410 can perform tracking using computer vision-based tracking, model-based tracking, and/or simultaneous localization and mapping (SLAM) techniques. For instance, the compute components 410 can perform SLAM or can be in communication (wired or wireless) with a SLAM system (not shown in FIG. 4), such as the SLAM system 500 of FIG. 5. SLAM refers to a class of techniques where a map of an environment (e.g., a map of an environment being modeled by system 400) is created while simultaneously tracking the pose of a camera (e.g., image sensor 402) and/or the system 400 relative to that map. The map can be referred to as a SLAM map, and can be three-dimensional (3D). The SLAM techniques can be performed using color or grayscale image data captured by the image sensor 402 (and/or other camera of the system 400), and can be used to generate estimates of 6DoF pose measurements of the image sensor 402 and/or the system 400. Such a SLAM technique configured to perform 6DoF tracking can be referred to as 6DoF SLAM. In some cases, the output of the one or more sensors (e.g., the accelerometer 404, the gyroscope 406, one or more IMUs, and/or other sensors) can be used to estimate, correct, and/or otherwise adjust the estimated pose.

In some cases, the 6DoF SLAM (e.g., 6DoF tracking) can associate features (e.g., keypoints) observed from certain input images from the image sensor 402 (and/or other camera or sensor) to the SLAM map. For example, 6DoF SLAM can use feature point associations from an input image (or other sensor data, such as a radar sensor, LIDAR sensor, etc.) to determine the pose (position and orientation) of the image sensor 402 and/or system 400 for the input image. 6DoF mapping can also be performed to update the SLAM map. In some cases, the SLAM map maintained using the 6DoF SLAM can contain 3D feature points (e.g., keypoints) triangulated from two or more images. For example, keyframes can be selected from input images or a video stream to represent an observed scene. For every keyframe, a respective 6DoF camera pose associated with the image can be determined. The pose of the image sensor 402 and/or the system 400 can be determined by projecting features (e.g., feature points or keypoints) from the 3D SLAM map into an image or video frame and updating the camera pose from verified 2D-3D correspondences.

In one illustrative example, the compute components 410 can extract feature points (e.g., keypoints) from certain input images (e.g., every input image, a subset of the input images, etc.) or from each keyframe. A feature point (also referred to as a keypoint or registration point) as used herein is a distinctive or identifiable part of an image, such as a part of a hand, an edge of a table, among others. Features extracted from a captured image can represent distinct feature points along three-dimensional space (e.g., coordinates on X, Y, and Z-axes), and every feature point can have an associated feature location. The feature points in keyframes either match (are the same or correspond to) or fail to match the feature points of previously-captured input images or keyframes. Feature detection can be used to detect the feature points. Feature detection can include an image processing operation used to examine one or more pixels of an image to determine whether a feature exists at a particular pixel. Feature detection can be used to process an entire captured image or certain portions of an image. For each image or keyframe, once features have been detected, a local image patch around the feature can be extracted. Features may be extracted using any suitable technique, such as Scale Invariant Feature Transform (SIFT) (which localizes features and generates their descriptions), Learned Invariant Feature Transform (LIFT), Speed Up Robust Features (SURF), Gradient Location-Orientation histogram (GLOH), Oriented Fast and Rotated Brief (ORB), Binary Robust Invariant Scalable Keypoints (BRISK), Fast Retina Keypoint (FREAK), KAZE, Accelerated KAZE (AKAZE), Normalized Cross Correlation (NCC), descriptor matching, another suitable technique, or a combination thereof.

In some cases, the system 400 can also track the hand and/or fingers of the user to allow the user to interact with and/or control virtual content in a virtual environment. For example, the system 400 can track a pose and/or movement of the hand and/or fingertips of the user to identify or translate user interactions with the virtual environment. The user interactions can include, for example and without limitation, moving an item of virtual content, resizing the item of virtual content, selecting an input interface element in a virtual user interface (e.g., a virtual representation of a mobile phone, a virtual keyboard, and/or other virtual interface), providing an input through a virtual user interface, etc.

FIG. 5 is a block diagram illustrating an architecture of a simultaneous localization and mapping (SLAM) system 500. In some examples, the SLAM system 500 can be, can include, or can be a part of the system 400 of FIG. 4 and can be part of the camera tracker 714 of FIG. 7 as well. In some examples, the SLAM system 500 can be, can include, or can be a part of an XR device, an autonomous vehicle, a vehicle, a computing system of a vehicle, a wireless communication device, a mobile device or handset (e.g., a mobile telephone or so-called "smart phone" or other mobile device), a wearable device (e.g., a network-connected watch), a personal computer, a laptop computer, a server computer, a portable video game console, a portable media player, a camera device, a manned or unmanned ground vehicle, a manned or unmanned aerial vehicle, a manned or unmanned aquatic vehicle, a manned or unmanned underwater vehicle, a manned or unmanned vehicle, a robot, another device, or any combination thereof.

The SLAM system 500 of FIG. 5 includes, or is coupled to, each of one or more sensors 505. The one or more sensors 505 can include one or more cameras 510. Each of the one or more cameras 510 may include an image capture device 105A (as shown in FIG. 1A), an image processing device 105B(as shown in FIG. 1A), an image capture and processing system 100 (as shown in FIG. 1A), another type of camera, or a combination thereof. Each of the one or more cameras 510 may be responsive to light from a particular spectrum of light. The spectrum of light may be a subset of the electromagnetic (EM) spectrum. For example, each of the one or more cameras 510 may be a visible light (VL) camera responsive to a VL spectrum, an infrared (IR) camera responsive to an IR spectrum, an ultraviolet (UV) camera responsive to a UV spectrum, a camera responsive to light from another spectrum of light from another portion of the electromagnetic spectrum, or some combination thereof.

The one or more sensors 505 can include one or more other types of sensors other than cameras 510, such as one or more of each of: accelerometers, gyroscopes, magnetometers, inertial measurement units (IMUs), altimeters, barometers, thermometers, radio detection and ranging (RADAR) sensors, light detection and ranging (LIDAR) sensors, sound navigation and ranging (SONAR) sensors, sound detection and ranging (SODAR) sensors, global navigation satellite system (GNSS) receivers, global positioning system (GPS) receivers, BeiDou navigation satellite system (BDS) receivers, Galileo receivers, Globalnaya Navigazionnaya Sputnikovaya Sistema (GLONASS) receivers, Navigation Indian Constellation (NavIC) receivers, Quasi-Zenith Satellite System (QZSS) receivers, Wi-Fi positioning system (WPS) receivers, cellular network positioning system receivers, Bluetooth^{®} beacon positioning receivers, short-range wireless beacon positioning receivers, personal area network (PAN) positioning receivers, wide area network (WAN) positioning receivers, wireless local area network (WLAN) positioning receivers, other types of positioning receivers, other types of sensors discussed herein, or combinations thereof. In some examples, the one or more sensors 505 can include any combination of sensors of the system 400 of FIG. 4.

The SLAM system 500 of FIG. 5 includes a visual-inertial odometry (VIO) tracker 515. The term visual-inertial odometry may also be referred to herein as visual odometry. The VIO tracker 515 receives sensor data 565 from the one or more sensors 505. For instance, the sensor data 565 can include one or more images captured by the one or more cameras 510. The sensor data 565 can include other types of sensor data from the one or more sensors 505, such as data from any of the types of sensors 505 listed herein. For instance, the sensor data 565 can include inertial measurement unit (IMU) data from one or more IMUs of the one or more sensors 505.

Upon receipt of the sensor data 565 from the one or more sensors 505, the VIO tracker 515 performs feature detection, extraction, and/or tracking using a feature tracking engine 520 of the VIO tracker 515. For instance, where the sensor data 565 includes one or more images captured by the one or more cameras 510 of the SLAM system 500, the VIO tracker 515 can identify, detect, and/or extract features in each image. Features may include visually distinctive points in an image, such as portions of the image depicting edges and/or corners. The VIO tracker 515 can receive sensor data 565 periodically and/or continually from the one or more sensors 505, for instance by continuing to receive more images from the one or more cameras 510 as the one or more cameras 510 capture a video, where the images are video frames of the video. The VIO tracker 515 can generate descriptors for the features. Feature descriptors can be generated at least in part by generating a description of the feature as depicted in a local image patch extracted around the feature. In some examples, a feature descriptor can describe a feature as a collection of one or more feature vectors. In some cases, the VIO tracker 515 can be implemented using the hybrid system 500 discussed below with respect to FIG. 5.

The VIO tracker 515, in some cases with the mapping engine 530 and/or the relocalization engine 555, can associate the plurality of features with a map of the environment based on such feature descriptors. The feature tracking engine 520 of the VIO tracker 515 can perform feature tracking by recognizing features in each image that the VIO tracker 515 already previously recognized in one or more previous images, in some cases based on identifying features with matching feature descriptors in different images. The feature tracking engine 520 can track changes in one or more positions at which the feature is depicted in each of the different images. For example, the feature extraction engine can detect a particular corner of a room depicted in a left side of a first image captured by a first camera of the cameras 510. The feature extraction engine can detect the same feature (e.g., the same particular corner of the same room) depicted in a right side of a second image captured by the first camera. The feature tracking engine 520 can recognize that the features detected in the first image and the second image are two depictions of the same feature (e.g., the same particular corner of the same room), and that the feature appears in two different positions in the two images. The VIO tracker 515 can determine, based on the same feature appearing on the left side of the first image and on the right side of the second image that the first camera has moved, for example if the feature (e.g., the particular corner of the room) depicts a static portion of the environment.

The VIO tracker 515 can include a sensor integration engine 525. The sensor integration engine 525 can use sensor data from other types of sensors 505 (other than the cameras 510) to determine information that can be used by the feature tracking engine 520 when performing the feature tracking. For example, the sensor integration engine 525 can receive IMU data (e.g., which can be included as part of the sensor data 565) from an IMU of the one or more sensors 505. The sensor integration engine 525 can determine, based on the IMU data in the sensor data 565, that the SLAM system 500 has rotated 15 degrees in a clockwise direction from acquisition or capture of a first image and capture to acquisition or capture of the second image by a first camera of the cameras 510. Based on this determination, the sensor integration engine 525 can identify that a feature depicted at a first position in the first image is expected to appear at a second position in the second image, and that the second position is expected to be located to the left of the first position by a predetermined distance (e.g., a predetermined number of pixels, inches, centimeters, millimeters, or another distance metric). The feature tracking engine 520 can take this expectation into consideration in tracking features between the first image and the second image.

Based on the feature tracking by the feature tracking engine 520 and/or the sensor integration by the sensor integration engine 525, the VIO tracker 515 can determine a 3D feature positions 572 of a particular feature. The 3D feature positions 572 can include one or more 3D feature positions and can also be referred to as 3D feature points. The 3D feature positions 572 can be a set of coordinates along three different axes that are perpendicular to one another, such as an X coordinate along an X axis (e.g., in a horizontal direction), a Y coordinate along a Y axis (e.g., in a vertical direction) that is perpendicular to the X axis, and a Z coordinate along a Z axis (e.g., in a depth direction) that is perpendicular to both the X axis and the Y axis. In some aspects, the VIO tracker 515 can also determine one or more keyframes 570 (referred to hereinafter as keyframes 570) corresponding to the particular feature. A keyframe (from one or more keyframes 570) corresponding to a particular feature may be an image in which the particular feature is clearly depicted. In some examples, a keyframe (from the one or more keyframes 570) corresponding to a particular feature may be an image in which the particular feature is clearly depicted. In some examples, a keyframe corresponding to a particular feature may be an image that reduces uncertainty in the 3D feature positions 572 of the particular feature when considered by the feature tracking engine 520 and/or the sensor integration engine 525 for determination of the 3D feature positions 572. In some examples, a keyframe corresponding to a particular feature also includes data about the pose 585 of the SLAM system 500 and/or the camera(s) 510 during capture of the keyframe. In some examples, the VIO tracker 515 can send 3D feature positions 572 and/or keyframes 570 corresponding to one or more features to the mapping engine 530. In some examples, the VIO tracker 515 can receive map slices 575 from the mapping engine 530. The VIO tracker 515 can feature information within the map slices 575 for feature tracking using the feature tracking engine 520.

Based on the feature tracking by the feature tracking engine 520 and/or the sensor integration by the sensor integration engine 525, the VIO tracker 515 can determine a pose 585 of the SLAM system 500 and/or of the cameras 510 during capture of each of the images in the sensor data 565. The pose 585 can include a location of the SLAM system 500 and/or of the cameras 510 in 3D space, such as a set of coordinates along three different axes that are perpendicular to one another (e.g., an X coordinate, a Y coordinate, and a Z coordinate). The pose 585 can include an orientation of the SLAM system 500 and/or of the cameras 510 in 3D space, such as pitch, roll, yaw, or some combination thereof. In some examples, the VIO tracker 515 can send the pose 585 to the relocalization engine 555. In some examples, the VIO tracker 515 can receive the pose 585 from the relocalization engine 555.

The SLAM system 500 also includes a mapping engine 530. The mapping engine 530 can generate a 3D map of the environment based on the 3D feature positions 572 and/or the keyframes 570 received from the VIO tracker 515. The mapping engine 530 can include a map densification engine 535, a keyframe remover 540, a bundle adjuster 545, and/or a loop closure detector 550. The map densification engine 535 can perform map densification, in some examples, increase the quantity and/or density of 3D coordinates describing the map geometry. The keyframe remover 540 can remove keyframes, and/or in some cases add keyframes. In some examples, the keyframe remover 540 can remove keyframes 570 corresponding to a region of the map that is to be updated and/or whose corresponding confidence values are low. The bundle adjuster 545 can, in some examples, refine the 3D coordinates describing the scene geometry, parameters of relative motion, and/or optical characteristics of the image sensor used to generate the frames, according to an optimality criterion involving the corresponding image projections of all points. The loop closure detector 550 can recognize when the SLAM system 500 has returned to a previously mapped region, and can use such information to update a map slice and/or reduce the uncertainty in certain 3D feature points or other points in the map geometry.

The mapping engine 530 can output map slices 575 to the VIO tracker 515. The map slices 575 can represent 3D portions or subsets of the map. The map slices 575 can include map slices 575 that represent new, previously-unmapped areas of the map. The map slices 575 can include map slices 575 that represent updates (or modifications or revisions) to previously-mapped areas of the map. The mapping engine 530 can output map information 580 to the relocalization engine 555. The map information 580 can include at least a portion of the map generated by the mapping engine 530. The map information 580 can include one or more 3D points making up the geometry of the map, such as one or more 3D feature positions 572. The map information 580 can include one or more keyframes 570 corresponding to certain features and certain 3D feature positions 572.

The SLAM system 500 also includes a relocalization engine 555. The relocalization engine 555 can perform relocalization, for instance when the VIO tracker 515 fail to recognize more than a threshold number of features in an image, and/or the VIO tracker 515 loses track of the pose 585 of the SLAM system 500 within the map generated by the mapping engine 530. The relocalization engine 555 can perform relocalization by performing extraction and matching using an extraction and matching engine 560. For instance, the extraction and matching engine 560 can by extract features from an image captured by the cameras 510 of the SLAM system 500 while the SLAM system 500 is at a current pose 585, and can match the extracted features to features depicted in different keyframes 570, identified by 3D feature positions 572, and/or identified in the map information 580. By matching these extracted features to the previously-identified features, the relocalization engine 555 can identify that the pose 585 of the SLAM system 500 is a pose 585 at which the previously-identified features are visible to the cameras 510 of the SLAM system 500, and is therefore similar to one or more previous poses 585 at which the previously-identified features were visible to the cameras 510. In some cases, the relocalization engine 555 can perform relocalization based on wide baseline mapping, or a distance between a current camera position and camera position at which feature was originally captured. The relocalization engine 555 can receive information for the pose 585 from the VIO tracker 515, for instance regarding one or more recent poses of the SLAM system 500 and/or cameras 510, which the relocalization engine 555 can base its relocalization determination on. Once the relocalization engine 555 relocates the SLAM system 500 and/or cameras 510 and thus determines the pose 585, the relocalization engine 555 can output the pose 585 to the VIO tracker 515.

The SLAM system 500 can generate the depth values (e.g., sparse depth values) as a byproduct of its other system processing described above. The depth values (e.g., sparse depth values) are used to perform pos-hoc scaling as described in more detail below with reference to FIG. 7.

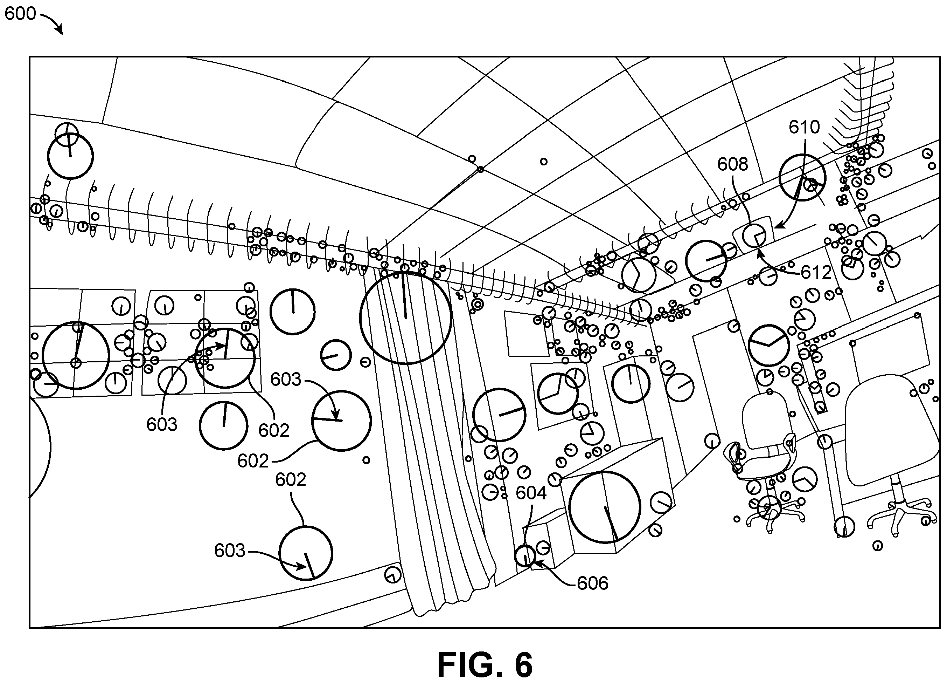

FIG. 6 illustrate an example frame 600 of a scene. Frame 600 provides illustrative examples of feature information that can be captured and/or processed by a system (e.g., the system 400 shown in FIG. 4 or the system 500 of FIG. 5) during tracking and/or mapping. In the illustrated example of FIG. 6, example features 602 are illustrated as circles of differing diameters. In some cases, the center of each of the features 602 can be referred to as a feature center location. In some cases, the diameter of the circles can represent a feature scale (also referred to as a blob size) associated with each of the example features 602.

Each of the features 602 can also include a dominant orientation vector 603 illustrated as a radial segment. In one illustrative example, the dominant orientation vector 603 (also referred to as a dominant orientation herein) can be determined based on pixel gradients within a patch (also referred to as a blob or region). For instance, the dominant orientation vector 603 can be determined based on the orientation of edge features in a neighborhood (e.g., a patch of nearby pixels) around the center of the feature. Another example feature 604 is shown with a dominant orientation 606. In some implementations, a feature can have multiple dominant orientations. For example, if no single orientation is clearly dominant, then a feature can have two or more dominant orientations associated with the most prominent orientations. Another example feature 608 is illustrated with two dominant orientation vectors 610 and 612.

In addition to the feature center location, blob size, and dominant orientation, each of the features 602, 604, 608 can also be associated with a descriptor that can be used to associate the features between different frames. For example, if the pose of the camera that captured frame 600 changes, the x-y coordinate of each of the feature center locations for each of the features 602, 604, 608 can also change, and the descriptor assigned to each feature can be used to match the features between the two different frames. In some cases, the tracking and mapping operations of an XR system can utilize different types of descriptors for the features 602, 604, 608. Examples of descriptors for the features 602, 604, 608 can include SIFT, FREAK, and/or other descriptors. In some cases, a tracker can operate on image patches directly or can operate on the descriptors (e.g., SIFT descriptors, FREAK descriptors, etc.).

As previously described, machine learning based systems (e.g., using a deep learning neural network) can be used in some cases to detect features (e.g., keypoints or feature points) for localization and mapping and to generate descriptors for the detected features. However, it can be difficult to obtain ground truth and annotations (or labels) for training a machine learning based feature (e.g., keypoint or feature point) detector and descriptor generator.

FIG. 7 illustrates is a flow diagram including a system 700 showing an example of using depth values 715 (e.g., sparse depth values) to perform post-hoc scaling of scale-ambiguous depth prediction data. As shown, a trained depth network 704 receives an image 702. The trained depth network 704 produces a scale-ambiguous depth prediction 706 for the image 702. As noted above, a challenge with the self-supervised machine learning depth network 704 is that its depth prediction values are typically based on relative distances (in a generic "unit" on not on a known specific scale like meters or feet) between objects in the image 702 or between different image frames. In this regard, the depth prediction values are scale-ambiguous. The scale-ambiguous depth prediction 706 in FIG. 7 shows light shading for portions of the image 702 that are closer to the camera and darker portions for portions that are more distant from the camera. However, the shading in the scale-ambiguous depth prediction 706 does not indicate actual values in a particular scale (e.g., meters in a metric system) of the distance of the chair or desk shown in the image 702.

As previously noted, the systems and techniques described herein provide for a post-hoc scaling (using post-hoc scaling engine 708) of the scale-ambiguous depth prediction 706 to generate a scale-correct depth prediction 716 for the image. The term post-hoc (a Latin phrase) means "after this" or "after the event." For example, after the trained depth network 704 has produced the scale-ambiguous depth prediction, the scaling engine or post-hoc scaling engine 708 will utilize depth values (e.g., sparse depth values) to correct the scale of the depth prediction. Post-hoc may also refer to a post-hoc analysis or post-hoc test or statistical analyses that were not specified before the data were seen. Post-hoc theorizing and generating hypotheses can be based on data already observed. In some cases, the data already observed is the scale-ambiguous depth prediction 706 obtained from the trained depth network 704.

The depth values 715 (e.g., sparse depth values) can be obtained from the use of multiple images 710, 712 obtained from a camera tracker 714 which can produce the depth values 715. In one example, 100 pixels may have depth values for the salient portions of the images 710, 712. The camera tracking engine or camera tracker 714 can use a 6 degrees of freedom (6DoF) tracking algorithm that can rely on salient features points across the images 710, 712 and can match these salient points to solve for camera motion. In the 6DoF algorithm there are three variables for the rotations and three variables for the translations. In some aspects, the camera tracker 714 can use a computer-vision algorithm with no deep learning component. In such aspects, the camera tracker 714 is not reliant on training data or machine learning techniques. The camera tracker 714 can determine salient features in the image data of the images 710, 712 and can match the salient features so that the system 700 can solve an optimization to find the camera motion from one image 710 to another image 712. The depth of the salient points (shown as the depth values 715, such as sparse depth values) is a byproduct of this algorithm. Thus, the camera tracker 714 obtains the depth values of the salient points (e.g., a sparse set of salient points corresponding to the sparse depth values). The depth values 715 can be obtained via the camera tracker 714 in meters or another measurement system such as feet.

In some aspects, for each frame, the system can use one or more representative values (e.g., one or more statistical measures, such as median value, a mean or average value, or other representative value) of the depth values 715 (e.g., sparse depth values) to scale the predicted depth map. For example, the following equation can be used in some cases: depth_{final} = depthᵢₙᵢₜᵢₐₗ * medianₛₚₐᵣₛₑ/median_{pred}. In such an equation, the system can use the representative value (e.g., the median value) of the depth values 715 (e.g., sparse depth values) for a respective frame (relative to one or more other frames). The depthᵢₙᵢₜᵢₐₗ value can relate to an initial depth prediction for a particular pixel. The medianₛₚₐᵣₛₑ value can represent a value for the entire frame as a median value derived from the depth values 715 (e.g., sparse depth values). The medianₛₚₐᵣₛₑ value might alternatively cover a region or sub-region of the entire frame that may or may not include the pixel associated with the depthᵢₙᵢₜᵢₐₗ value. The median_{pred} can refer to the predicted median value across the entire frame or in an alternative approach on a sub-region of the entire frame that may or may not include the pixel associated with the depthᵢₙᵢₜᵢₐₗ value. This represents an example of the scaling that occurs to bring the prediction to the proper units (such as metric or feet). The scale for the depth prediction is correct and thus more usable for applications like autonomous driving.

In another aspect, if a stereo camera is available, the system can use a feature matching algorithm to find depth values 715 (e.g., sparse depth values) by use the stereo pair of images. These depth values 715 can then be used to scale the prediction from the machine learning network 704. The system 700 can calculate the median value of the depth values 715 obtained from the stereo pair of images. Note that this differs in that the two images from a stereo camera are simultaneous in time rather than sequential in time as are images 710, 712. The camera tracking algorithm can be applied to two stereo images in a similar manner to apply the algorithm to two consecutive images in time to obtain the depth values 715. The application of the algorithm can even be simpler as the camera motion in this scenario is fixed for the stereo images. A camera tracking system with more than two images can also be deployed as well with similar analysis to obtain the depth values 715 (e.g., sparse depth values).

As another illustrative example of a representative value, the system 700 may use the representative value (e.g., statistical measure such as a mean value) between frames. In another aspect, instead of performing frame-level scaling (one scalar per frame), the system 700 may implement an approach where different scalars can be used for different parts of the frame. For example, the system 700 may take the depth values (e.g., sparse depth values) and perform regional scaling. Sparse feature points are scattered over a frame. The system 700 may divide the frame into a grid of a plurality of blocks such that sparse values that fall within a portion or a block of the grid, the system 700 can obtain a scaling for that block of the grid based on the sparse values within that block.

In some aspects, the system 700 can perform object detection and divide an image into regions based on the detected object(s) and generate a foreground and background, for example. The system 700 can gather the sparse values in the respective regions and determine one or more representative values (e.g., one or more statistical measures, such as a median value, mean value, etc.) for the sparse values in that respective region and use that for the post-hoc scaling engine 708. This process can be performed as well for groups of regions (e.g., groups of objects) that might all fall within a foreground (e.g., a tractor and a tree or other grouping) in which a median, mean, or other representative value for sparse values associated with the group of regions is obtained which a background region (mountains and sky or other grouping) might have a different median/mean/other representative value for sparse values associated with the background region. Different types of objects can be grouped together in various different types of groups for the purpose of determining a median/mean/other value for the respective groups of objects.

In one aspect, the post-hoc scaling engine 708 can provide a correct metric (or other units) scale to the depth prediction 706 from the self-supervised network 704. Computationally this benefit can come for free from a computational perspective, since the 6DoF camera tracking algorithm operating on the camera tracker 714 will typically need to run on the device. The system 700 can be evaluated on an internal XR benchmark consisting of a number of scenes such as eight scenes. The inventors have found substantial improvement in the absolute relative error related to depth prediction when using post-hoc median scaling as described above.

The system 700 of FIG. 7 can support different configurations. For instance, in one example configuration, the system 700 can include the camera tracker 714 and the post-hoc scaling module engine 708. The camera tracker 714 and/or the post-hoc scaling engine 708 can then receive from an outside device the scale-ambiguous depth prediction 706 and generate the scale-correct depth prediction 716. In another example configuration, the system 700 can include the trained depth network 704 as well as the camera tracker 714 and the post-hoc scaling engine 708. In yet another example configuration, the system 700 may include the post-hoc scaling engine 708 that receives the scale-ambiguous depth prediction 706 and the depth values 715 (e.g., sparse depth values), and performs the post-hoc scaling operation to produce the scale-correct depth prediction 716.

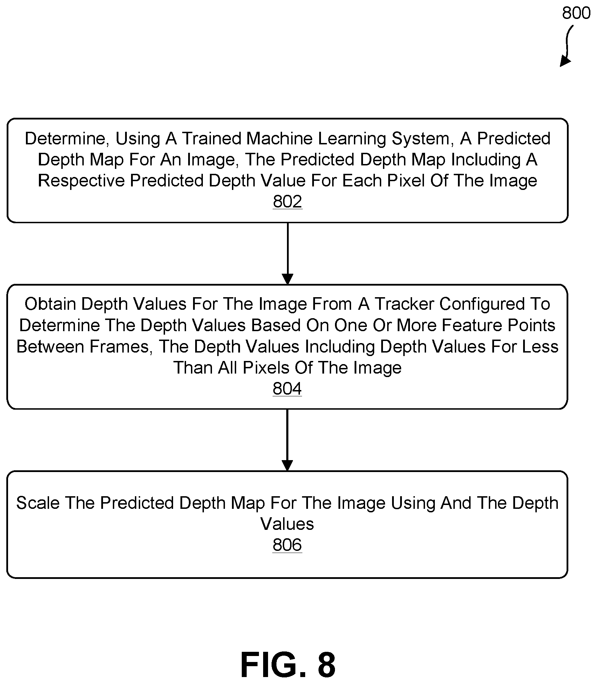

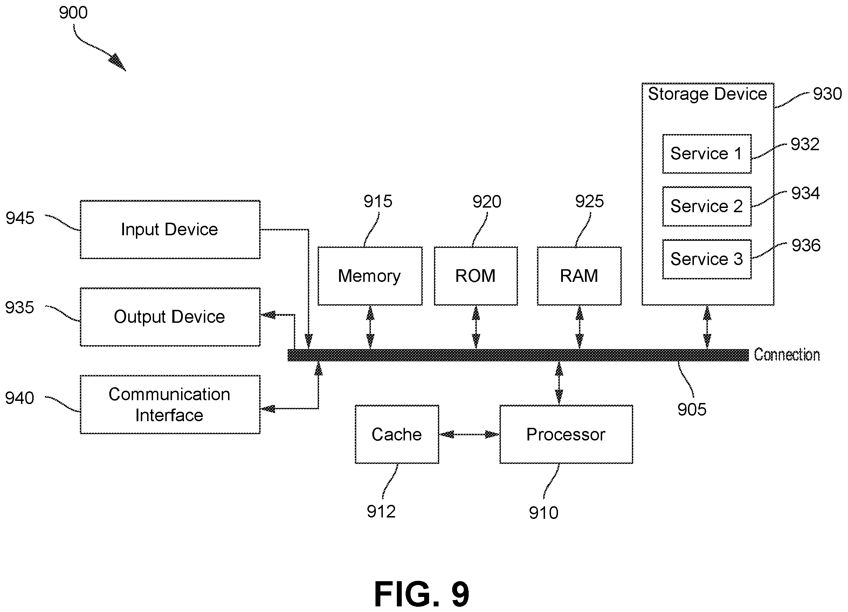

FIG. 8 is a flowchart illustrating an example of a process 800 for processing image and/or video data. The process 800 can be performed by a computing device (or apparatus), or a component or system (e.g., a chipset) of the computing device. The computing device (or component or system thereof) can include or can be the system 500 of FIG. 5, the system 700 of FIG. 7, or any component thereof. The operations of the process 800 may be implemented as software components that are executed and run on one or more processors (e.g., the processor 910 of FIG. 9 or other processor(s)). Further, the transmission and reception of signals by the first network entity in the process 800 may be enabled, for example, by one or more antennas and/or one or more transceivers such as wireless transceiver(s).

At block 802, the computing device (or component or system thereof) can determine, using a trained machine learning system, a predicted depth map for an image. The predicted depth map includes a respective predicted depth value for each pixel of the image (e.g., input images 702, 710, 712). In an illustrative example, the trained machine learning system is a trained neural network. In some cases, the input data includes one or more images, radar data, light detection and ranging (LIDAR) data, any combination thereof, and/or other data. In one illustrative example, the input data includes a first image of a scene with a first characteristic, a second image of a scene with a second characteristic, and a third image of a scene with a third characteristic. The characteristics may relate to movement of a camera or movement within the individual image.

At block 804, the computing device (or component or system thereof) can obtain depth values (e.g., depth values 715, such as sparse depth values) for the image from a tracker (e.g., using a camera tracker 714) configured to determine the depth values based on one or more feature points between frames. In some cases, the tracker is a six-degree-of-freedom (6DOF). The depth values 715 include depth values (e.g., sparse depth values) for less than all pixels of the image. In one aspect, the camera tracker 714 can be configured to use a 6DOF tracking algorithm to generate the depth values 715 based on matching identified salient feature values across multiple frames (e.g., which can be a series of frames in time or a stereo set of images) and solving for camera motion. In some cases, the frames include one or more pairs of stereo images. For instance, the computing device (or component or system thereof) can obtain the depth values 715 from the feature tracker (e.g., the camera tracker 714) configured to determine the depth values 715 from one or more pairs of stereo images.

At block 806, the computing device (or component or system thereof) can scale, using a post-hoc scaling engine 708, the predicted depth map for the image using and the depth values 715 (e.g., sparse depth values). In one illustrative example, the computing device (or component or system thereof) can scale the predicted depth map using a representative value of the depth values 715. In one illustrative example, the computing device (or component or system thereof) can scale the predicted depth map associated with the image using a first representative value of the depth values 715 and a second representative value of predicted depth values of the predicted depth map.

In another example, the first representative value can include a first statistical measure (e.g., a mean value) of the depth values or a second statistical measure (e.g., a median value) of the depth values. The second representative value can include a mean of the predicted depth values of the predicted depth map or a median of the predicted depth values of the predicted depth map.

In another illustrative example, computing device (or component or system thereof) can scale the predicted depth map by determining a final depth map based on multiplying the predicted depth map with a scale factor. In an illustrative example, the scale factor can include a relationship between a first representative value of the depth values and a second representative value of predicted depth values of the predicted depth map. In one example, the relationship includes a ratio of a first representative value of the depth values and a second representative value of predicted depth values of the predicted depth map.

In another example, the first representative value can include a first statistical measure (e.g., a mean value) of the depth values or a second statistical measure (e.g., a median value) of the depth values. The second representative value can include a mean of the predicted depth values of the predicted depth map or a median of the predicted depth values of the predicted depth map.

The computing device (or apparatus) can include any suitable device, such as a mobile device (e.g., a mobile phone), a desktop computing device, a tablet computing device, a wearable device (e.g., a VR headset, an AR headset, AR glasses, a network-connected watch or smartwatch, or other wearable device), a server computer, an vehicle (e.g., an autonomous vehicle or semi-autonomous vehicle) or computing device or system of the vehicle, a robotic device, a laptop computer, a smart television, a camera, and/or any other computing device with the resource capabilities to perform the processes described herein, including the process 800 and/or any other process described herein. In some cases, the computing device or apparatus may include various components, such as one or more input devices, one or more output devices, one or more processors, one or more microprocessors, one or more microcomputers, one or more cameras, one or more sensors, and/or other component(s) that are configured to carry out the steps of processes described herein. In some examples, the computing device may include a display, a network interface configured to communicate and/or receive the data, any combination thereof, and/or other component(s). The network interface may be configured to communicate and/or receive Internet Protocol (IP) based data or other type of data.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein.

The process 800 is illustrated as a logical flow diagram, the operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the process 800 and/or any other process described herein may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

FIG. 9 illustrates an example computing device architecture 900 of an example computing device which can implement the various techniques described herein. In some examples, the computing device can include a mobile device, a wearable device, an extended reality device (e.g., a virtual reality (VR) device, an augmented reality (AR) device, or a mixed reality (MR) device), a personal computer, a laptop computer, a video server, a vehicle (or computing device of a vehicle), or other device. For example, the computing device architecture 900 can implement the system 700 of FIG. 7 or any component therefore as a separate aspect. The components of computing device architecture 900 are shown in electrical communication with each other using connection 905, such as a bus. The example computing device architecture 900 includes a processing unit (CPU or processor) 910 and computing device connection 905 that couples various computing device components including computing device memory 915, such as read only memory (ROM) 920 and random-access memory (RAM) 925, to processor 910.

Computing device architecture 900 can include a cache of high-speed memory connected directly with, in close proximity to, or integrated as part of processor 910. Computing device architecture 900 can copy data from memory 915 and/or the storage device 930 to cache 912 for quick access by processor 910. In this way, the cache can provide a performance boost that avoids processor 910 delays while waiting for data. These and other engines can control or be configured to control processor 910 to perform various actions. Other computing device memory 915 may be available for use as well. Memory 915 can include multiple different types of memory with different performance characteristics. Processor 910 can include any general-purpose processor and a hardware or software service, such as service 1 932, service 2 934, and service 3 936 stored in storage device 930, configured to control processor 910 as well as a special-purpose processor where software instructions are incorporated into the processor design. Processor 910 may be a self-contained system, containing multiple cores or processors, a bus, memory controller, cache, etc. A multi-core processor may be symmetric or asymmetric.

To enable user interaction with the computing device architecture 900, input device 945 can represent any number of input mechanisms, such as a microphone for speech, a touch-sensitive screen for gesture or graphical input, keyboard, mouse, motion input, speech and so forth. Output device 935 can also be one or more of a number of output mechanisms known to those of skill in the art, such as a display, projector, television, speaker device, etc. In some instances, multimodal computing devices can enable a user to provide multiple types of input to communicate with computing device architecture 900. Communication interface 940 can generally govern and manage the user input and computing device output. There is no restriction on operating on any particular hardware arrangement and therefore the basic features here may easily be substituted for improved hardware or firmware arrangements as they are developed.

Storage device 930 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 925, read only memory (ROM) 920, and hybrids thereof. Storage device 930 can include services 932, 934, 936 for controlling processor 910. Other hardware or software modules or engines are contemplated. Storage device 930 can be connected to the computing device connection 905. In one aspect, a hardware module that performs a particular function can include the software component stored in a computer-readable medium in connection with the necessary hardware components, such as processor 910, connection 905, output device 935, and so forth, to carry out the function.

Aspects of the present disclosure are applicable to any suitable electronic device (such as security systems, smartphones, tablets, laptop computers, vehicles, drones, or other devices) including or coupled to one or more active depth sensing systems. While described below with respect to a device having or coupled to one light projector, aspects of the present disclosure are applicable to devices having any number of light projectors and are therefore not limited to specific devices.

The term "device" is not limited to one or a specific number of physical objects (such as one smartphone, one controller, one processing system and so on). As used herein, a device may be any electronic device with one or more parts that may implement at least some portions of this disclosure. While the below description and examples use the term "device" to describe various aspects of this disclosure, the term "device" is not limited to a specific configuration, type, or number of objects. Additionally, the term "system" is not limited to multiple components or specific aspects. For example, a system may be implemented on one or more printed circuit boards or other substrates and may have movable or static components. While the below description and examples use the term "system" to describe various aspects of this disclosure, the term "system" is not limited to a specific configuration, type, or number of objects.

Specific details are provided in the description above to provide a thorough understanding of the aspects and examples provided herein. However, it will be understood by one of ordinary skill in the art that the aspects may be practiced without these specific details. For clarity of explanation, in some instances the present technology may be presented as including individual functional blocks including functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the aspects in unnecessary detail. In other instances, well-known circuits, processes, algorithms, structures, and techniques may be shown without unnecessary detail in order to avoid obscuring the aspects.

Individual aspects may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data which cause or otherwise configure a general-purpose computer, special purpose computer, or a processing device to perform a certain function or group of functions. Portions of computer resources used can be accessible over a network. The computer executable instructions may be, for example, binaries, intermediate format instructions such as assembly language, firmware, source code, etc.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as flash memory, memory or memory devices, magnetic or optical disks, flash memory, USB devices provided with non-volatile memory, networked storage devices, compact disk (CD) or digital versatile disk (DVD), any suitable combination thereof, among others. A computer-readable medium may have stored thereon code and/or machine-executable instructions that may represent a procedure, a function, a subprogram, a program, a routine, a subroutine, a module, an engine, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some aspects the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific aspects thereof, but those skilled in the art will recognize that the application is not limited thereto. Thus, while illustrative aspects of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, aspects can be utilized in any number of environments and applications beyond those described herein without departing from the broader scope of the specification. The specification and drawings are, accordingly, to be regarded as illustrative rather than restrictive. For the purposes of illustration, methods were described in a particular order. It should be appreciated that in alternate aspects, the methods may be performed in a different order than that described.

One of ordinary skill will appreciate that the less than ("<") and greater than (">") symbols or terminology used herein can be replaced with less than or equal to ("≤") and greater than or equal to ("≥") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, A and B and C, or any duplicate information or data (e.g., A and A, B and B, C and C, A and A and B, and so on), or any other ordering, duplication, or combination of A, B, and C. The language "at least one of" a set and/or "one or more" of a set does not limit the set to the items listed in the set. For example, claim language reciting "at least one of A and B" or "at least one of A or B" may mean A, B, or A and B, and may additionally include items not listed in the set of A and B. The phrases "at least one" and "one or more" are used interchangeably herein.

Claim language or other language reciting "at least one processor configured to," "at least one processor being configured to," "one or more processors configured to," "one or more processors being configured to," or the like indicates that one processor or multiple processors (in any combination) can perform the associated operation(s). For example, claim language reciting "at least one processor configured to: X, Y, and Z" means a single processor can be used to perform operations X, Y, and Z; or that multiple processors are each tasked with a certain subset of operations X, Y, and Z such that together the multiple processors perform X, Y, and Z; or that a group of multiple processors work together to perform operations X, Y, and Z. In another example, claim language reciting "at least one processor configured to: X, Y, and Z" can mean that any single processor may only perform at least a subset of operations X, Y, and Z.

Where reference is made to one or more elements performing functions (e.g., steps of a method), one element may perform all functions, or more than one element may collectively perform the functions. When more than one element collectively performs the functions, each function need not be performed by each of those elements (e.g., different functions may be performed by different elements) and/or each function need not be performed in whole by only one element (e.g., different elements may perform different sub-functions of a function). Similarly, where reference is made to one or more elements configured to cause another element (e.g., an apparatus) to perform functions, one element may be configured to cause the other element to perform all functions, or more than one element may collectively be configured to cause the other element to perform the functions.

Where reference is made to an entity (e.g., any entity or device described herein) performing functions or being configured to perform functions (e.g., steps of a method), the entity may be configured to cause one or more elements (individually or collectively) to perform the functions. The one or more components of the entity may include at least one memory, at least one processor, at least one communication interface, another component configured to perform one or more (or all) of the functions, and/or any combination thereof. Where reference to the entity performing functions, the entity may be configured to cause one component to perform all functions, or to cause more than one component to collectively perform the functions. When the entity is configured to cause more than one component to collectively perform the functions, each function need not be performed by each of those components (e.g., different functions may be performed by different components) and/or each function need not be performed in whole by only one component (e.g., different components may perform different sub-functions of a function).

The various illustrative logical blocks, modules, engines, circuits, and algorithm steps described in connection with the aspects disclosed herein may be implemented as electronic hardware, computer software, firmware, or combinations thereof. To clearly illustrate this interchangeability of hardware and software, various illustrative components, blocks, modules, engines, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random-access memory (RAM) such as synchronous dynamic random-access memory (SDRAM), read-only memory (ROM), non-volatile random-access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general-purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

## Claims

1. An apparatus (900) for scaling a depth prediction, the apparatus (900) comprising:
at least one memory (915); and
at least one processor (910) coupled to the at least one memory (915) and configured to:
determine, using a trained machine learning system (704), a predicted depth map for an image of a scene, the predicted depth map including a respective predicted depth value for each pixel of the image;
obtain sparse depth values for the image from a tracker (714) configured to determine the sparse depth values based on one or more feature points between frames of the scene, the sparse depth values including
depth values for less than all pixels of the image; **characterized in that** the at least one processor is configured to:
divide the image into a grid of a plurality of blocks; and
for each block of the plurality of blocks, scale the predicted depth map for the image using the sparse depth values in the respective block.

2. The apparatus (900) of claim 1, wherein the tracker (714) is a six-degree-of-freedom, 6DOF, tracker.

3. The apparatus (900) of claim 2, wherein the 6DOF tracker is configured to use a 6DOF tracking algorithm to generate the depth values based on matching identified salient feature values across multiple frames and solving for camera motion.

4. The apparatus (900) of claim 1, wherein the frames comprise one or more pairs of stereo images.

5. The apparatus (900) of claim 1, wherein the at least one processor (910) is further configured to:
scale the predicted depth map using a representative value of the depth values.

6. The apparatus (900) of claim 5, wherein the at least one processor (910) is further configured to:
scale the predicted depth map associated with the image using a first representative value of the depth values and a second representative value of predicted depth values of the predicted depth map, wherein the first representative value includes a first statistical measure of the depth values or a second statistical measure value of the depth values, and wherein the second representative value includes a first statistical measure of the predicted depth values of the predicted depth map or a second statistical measure of the predicted depth values of the predicted depth map.

7. The apparatus (900) of claim 1, wherein, to scale the predicted depth map, the at least one processor (910) is further configured to:
determine a final depth map based on multiplying the predicted depth map with a scale factor, wherein the scale factor includes a relationship between a first representative value of the depth values and a second representative value of predicted depth values of the predicted depth map, wherein the first representative value includes a first statistical measure of the depth values or a second statistical measure value of the depth values, and wherein the second representative value includes a first statistical measure of the predicted depth values of the predicted depth map or a second statistical measure of the predicted depth values of the predicted depth map.

8. A method (800) for processing image data, the method (800) comprising:
determining (802), using a trained machine learning system, a predicted depth map for an image of a scene, the predicted depth map including a respective predicted depth value for each pixel of the image;
obtaining (804) sparse depth values for the image from a tracker configured to determine the sparse depth values based on one or more feature points between frames of the scene, the sparse depth values including depth values for less than all pixels of the image; **characterized by**
dividing the image into a grid of a plurality of blocks; and
for each block of the plurality of blocks, scaling (806) the predicted depth map for the image using the sparse depth values in the respective block.

9. The method (800) of claim 8, wherein the tracker is a six-degree-of-freedom, 6DOF, tracker, wherein the 6DOF tracker is configured to use a 6DOF tracking algorithm to generate the depth values based on matching identified salient feature values across multiple frames and solving for camera motion.

10. The method (800) of claim 8, wherein the frames comprise one or more pairs of stereo images.

11. The method (800) of claim 8, further comprising:
scaling the predicted depth map using a representative value of the depth values.

12. The method (800) of claim 11, further comprising:
scaling the predicted depth map associated with the image using a first representative value of the depth values and a second representative value of predicted depth values of the predicted depth map.

13. The method (800) of claim 12, wherein the first representative value includes a first statistical measure of the depth values or a second statistical measure value of the depth values, and wherein the second representative value includes a first statistical measure of the predicted depth values of the predicted depth map or a second statistical measure of the predicted depth values of the predicted depth map.

14. The method (800) of claim 8, wherein scaling (806) the predicted depth map further comprises:
determining a final depth map based on multiplying the predicted depth map with a scale factor, wherein the scale factor includes a relationship between a first representative value of the depth values and a second representative value of predicted depth values of the predicted depth map, wherein the first representative value includes a first statistical measure of the depth values or a second statistical measure value of the depth values, and wherein the second representative value includes a first statistical measure of the predicted depth values of the predicted depth map or a second statistical measure of the predicted depth values of the predicted depth map.

15. A non-transitory computer-readable storage medium having stored thereon instructions which, when executed by one or more processors, cause the one or more processors to perform the method of any one of claims 8 to 14.

## Patentansprüche

1. Eine Vorrichtung (900) zum Skalieren einer Tiefenvoraussage, wobei die Vorrichtung (900) aufweist:
wenigstens einen Speicher (915), und
wenigstens einen Prozessor (910), der mit dem wenigstens einen Speicher (915) gekoppelt ist und konfiguriert ist zum:
Bestimmen, unter Verwendung eines trainierten Maschinenlernsystems (704), einer vorausgesagten Tiefen-Map für ein Bild einer Szene, wobei die vorausgesagte Tiefen-Map einen entsprechenden vorausgesagten Tiefenwert für jedes Pixel des Bilds enthält,
Erhalten von spärlichen Tiefenwerten für das Bild von einem Verfolger (714), der konfiguriert ist zum Bestimmen der spärlichen Tiefenwerte basierend auf einem oder mehreren Merkmalspunkten zwischen Rahmen der Szene, wobei die spärlichen Tiefenwerte Tiefenwerte für weniger als alle Pixel des Bilds umfassen,
**dadurch gekennzeichnet, dass** der wenigstens eine Prozessor konfiguriert ist zum:
Teilen des Bilds in ein Raster mit einer Vielzahl von Blöcken, und
für jeden Block aus der Vielzahl von Blöcken, Skalieren der vorausgesagten Tiefen-Map für das Bild unter Verwendung der spärlichen Tiefenwerte in dem entsprechenden Block.

2. Vorrichtung (900) nach Anspruch 1, wobei der Verfolger (714) ein Verfolger mit sechs Freiheitsgraden (Six-Degree-of-Freedom bzw. 6DOF) ist.

3. Vorrichtung (900) nach Anspruch 2, wobei der 6DOF-Verfolger konfiguriert ist zum Verwenden eines 6DOF-Verfolgungsalgorithmus für das Generieren der Tiefenwerte basierend auf dem Abgleichen von identifizierten Werten von hervorstehenden Merkmalen über mehrere Rahmen und auf dem Auflösen für eine Kamerabewegung.

4. Vorrichtung (900) nach Anspruch 1, wobei die Rahmen ein oder mehrere Paare von Stereobildern aufweisen.

5. Vorrichtung (900) nach Anspruch 1, wobei der wenigstens eine Prozessor (910) weiterhin konfiguriert ist zum:
Skalieren der vorausgesagten Tiefen-Map unter Verwendung eines repräsentativen Werts der Tiefenwerte.

6. Vorrichtung (900) nach Anspruch 5, wobei der wenigstens eine Prozessor (910) weiterhin konfiguriert ist zum:
Skalieren der vorausgesagten Tiefen-Map, die mit dem Bild assoziiert ist, unter Verwendung eines ersten repräsentativen Werts der Tiefenwerte und eines zweiten repräsentativen Werts von vorausgesagten Tiefenwerten der vorausgesagten Tiefen-Map, wobei der erste repräsentative Wert ein erstes statistisches Maß der Tiefenwerte oder einen zweiten statistischen Messwert der Tiefenwerte enthält und wobei der zweite repräsentative Wert ein erstes statistisches Maß der vorausgesagten Tiefenwerte der vorausgesagten Tiefen-Map oder ein zweites statistisches Maß der vorausgesagten Tiefenwerte der vorausgesagten Tiefen-Map enthält.

7. Vorrichtung (900) nach Anspruch 1, wobei für das Skalieren der vorausgesagten Tiefen-Map der wenigstens eine Prozessor (910) weiterhin konfiguriert ist zum:
Bestimmen einer finalen Tiefen-Map basierend auf dem Multiplizieren der vorausgesagten Tiefen-Map mit einem Skalierungsfaktor, wobei der Skalierungsfaktor eine Beziehung zwischen einem ersten repräsentativen Wert der Tiefenwerte und einem zweiten repräsentativen Wert von vorausgesagten Tiefenwerten der vorausgesagten Tiefen-Map enthält, wobei der erste repräsentative Wert ein erstes statistisches Maß der Tiefenwerte oder einen zweiten statistischen Messwert der Tiefenwerte enthält und wobei der zweite repräsentative Wert ein erstes statistisches Maß der vorausgesagten Tiefenwerte der vorausgesagten Tiefen-Map oder ein zweites statistisches Maß der vorausgesagten Tiefenwerte der vorausgesagten Tiefen-Map enthält.

8. Ein Verfahren (800) zum Verarbeiten von Bilddaten, wobei das Verfahren (800) aufweist:
Bestimmen (802), unter Verwendung eines trainierten Maschinenlernsystems, einer vorausgesagten Tiefen-Map für ein Bild einer Szene, wobei die vorausgesagte Tiefen-Map einen entsprechenden vorausgesagten Tiefenwert für jedes Pixel des Bilds enthält,
Erhalten (804) von spärlichen Tiefenwerten für das Bild von einem Verfolger, der konfiguriert ist zum Bestimmen der spärlichen Tiefenwerte basierend auf einem oder mehreren Merkmalspunkten zwischen Rahmen der Szene, wobei die spärlichen Tiefenwerte Tiefenwerte für weniger als alle Pixel des Bilds umfassen,
**gekennzeichnet durch**:
Teilen des Bilds in ein Raster mit einer Vielzahl von Blöcken, und
für jeden Block aus der Vielzahl von Blöcken, Skalieren (806) der vorausgesagten Tiefen-Map für das Bild unter Verwendung der spärlichen Tiefenwerte in dem entsprechenden Block.

9. Verfahren (800) nach Anspruch 8, wobei der Verfolger ein Verfolger mit sechs Freiheitsgraden (Six-Degree-of-Freedom bzw. 6DOF) ist, wobei der 6DOF-Verfolger konfiguriert ist zum Verwenden eines 6DOF-Verfolgungsalgorithmus für das Generieren der Tiefenwerte basierend auf dem Abgleichen von identifizierten Werten von hervorstehenden Merkmalen über mehrere Rahmen und auf dem Auflösen für eine Kamerabewegung.

10. Verfahren (800) nach Anspruch 8, wobei die Rahmen ein oder mehrere Paare von Stereobildern aufweisen.

11. Verfahren (800) nach Anspruch 8, das weiterhin aufweist:
Skalieren der vorausgesagten Tiefen-Map unter Verwendung eines repräsentativen Werts der Tiefenwerte.

12. Verfahren (800) nach Anspruch 11, das weiterhin aufweist:
Skalieren der vorausgesagten Tiefen-Map, die mit dem Bild assoziiert ist, unter Verwendung eines ersten repräsentativen Werts der Tiefenwerte und eines zweiten repräsentativen Werts von vorausgesagten Tiefenwerten der vorausgesagten Tiefen-Map.

13. Verfahren (800) nach Anspruch 12, wobei der erste repräsentative Wert ein erstes statistisches Maß der Tiefenwerte oder einen zweiten statistischen Messwert der Tiefenwerte enthält und wobei der zweite repräsentative Wert ein erstes statistisches Maß der vorausgesagten Tiefenwerte der vorausgesagten Tiefen-Map oder ein zweites statistisches Maß der vorausgesagten Tiefenwerte der vorausgesagten Tiefen-Map enthält.

14. Verfahren (800) nach Anspruch 8, wobei das Skalieren (806) der vorausgesagten Tiefen-Map weiterhin aufweist:
Bestimmen einer finalen Tiefen-Map basierend auf dem Multiplizieren der vorausgesagten Tiefen-Map mit einem Skalierungsfaktor, wobei der Skalierungsfaktor eine Beziehung zwischen einem ersten repräsentativen Wert der Tiefenwerte und einem zweiten repräsentativen Wert von vorausgesagten Tiefenwerten der vorausgesagten Tiefen-Map enthält, wobei der erste repräsentative Wert ein erstes statistisches Maß der Tiefenwerte oder einen zweiten statistischen Messwert der Tiefenwerte enthält und wobei der zweite repräsentative Wert ein erstes statistisches Maß der vorausgesagten Tiefenwerte der vorausgesagten Tiefen-Map oder ein zweites statistisches Maß der vorausgesagten Tiefenwerte der vorausgesagten Tiefen-Map enthält.

15. Ein nicht-transitorisches, computerlesbares Speichermedium, auf dem Befehle gespeichert sind, die bei einer Ausführung durch einen oder mehrere Prozessoren den einen oder die mehreren Prozessoren veranlassen zum Durchführen des Verfahrens gemäß einem der Ansprüche 8 bis 14.

## Revendications

1. Appareil (900) de mise à l'échelle d'une prédiction de profondeur, l'appareil (900) comprenant :
au moins une mémoire (915) ; et
au moins un processeur (910) relié à l'au moins une mémoire (915) et configuré pour :
déterminer, en utilisant un système d'apprentissage automatique entraîné (704), une carte de profondeur prédite pour une image d'une scène, la carte de profondeur prédite comportant une valeur de profondeur prédite pour chaque pixel de l'image ;
obtenir des valeurs de profondeur dispersées de l'image à partir d'un dispositif de suivi (714) configuré pour déterminer les valeurs de profondeur dispersées sur la base d'un ou de plusieurs points caractéristiques entre des images de la scène, les valeurs de profondeur dispersées comportant des valeurs de profondeur pour moins que tous les pixels de l'image,
**caractérisé en ce que** l'au moins un processeur est configuré pour :
diviser l'image en une grille d'une pluralité de blocs ; et
pour chaque bloc de la pluralité de blocs, mettre à l'échelle la carte de profondeur prédite de l'image en utilisant les valeurs de profondeur dispersées du bloc respectif.

2. Appareil (900) selon la revendication 1, dans lequel le dispositif de suivi (714) est un dispositif de suivi à six degrés de liberté, 6DOF.

3. Appareil (900) selon la revendication 2, dans lequel le dispositif de suivi 6DOF est configuré pour utiliser un algorithme de suivi 6DOF pour générer les valeurs de profondeur sur la base d'une correspondance entre des valeurs des caractéristiques importantes identifiées sur plusieurs images et la résolution du mouvement de la caméra.

4. Appareil (900) selon la revendication 1, dans lequel les images comprennent une ou plusieurs paires d'images stéréo.

5. Appareil (900) selon la revendication 1, dans lequel l'au moins un processeur (910) est configuré en outre pour :
mettre à l'échelle la carte de profondeur prédite en utilisant une valeur représentative des valeurs de profondeur.

6. Appareil (900) selon la revendication 5, dans lequel l'au moins un processeur (910) est configuré en outre pour : mettre à l'échelle la carte de profondeur prédite associée à l'image en utilisant une première valeur représentative des valeurs de profondeur et une deuxième valeur représentative des valeurs de profondeur prédites de la carte de profondeur prédite, dans lequel la première valeur représentative comporte une première mesure statistique des valeurs de profondeur ou une deuxième valeur de mesure statistique des valeurs de profondeur, et dans lequel la deuxième valeur représentative comporte une première mesure statistique des valeurs de profondeur prédites de la carte de profondeur prédite ou une deuxième mesure statistique des valeurs de profondeur prédites de la carte de profondeur prédite.

7. Appareil (900) selon la revendication 1, dans lequel, pour mettre à l'échelle la carte de profondeur prédite, l'au moins un processeur (910) est configuré en outre pour :
déterminer une carte de profondeur finale sur la base de la multiplication de la carte de profondeur prédite par un facteur d'échelle, dans lequel le facteur d'échelle comporte une relation entre une première valeur représentative des valeurs de profondeur et une deuxième valeur représentative de valeurs de profondeur prédites de la carte de profondeur prédite, dans lequel la première valeur représentative comporte une première mesure statistique des valeurs de profondeur ou une deuxième valeur de mesure statistique des valeurs de profondeur, et dans lequel la deuxième valeur représentative comporte une première mesure statistique des valeurs de profondeur prédites de la carte de profondeur prédite ou une deuxième mesure statistique des valeurs de profondeur prédites de la carte de profondeur prédite.

8. Procédé (800) de traitement de données d'image, le procédé (800) comprenant :
la détermination (802), en utilisant un système d'apprentissage automatique entraîné, d'une carte de profondeur prédite pour une image d'une scène, la carte de profondeur prédite comportant une valeur de profondeur prédite pour chaque pixel de l'image ;
l'obtention (804) de valeurs de profondeur dispersées de l'image à partir d'un dispositif de suivi configuré pour déterminer les valeurs de profondeur dispersées sur la base d'un ou de plusieurs points caractéristiques entre des images de la scène, les valeurs de profondeur dispersées comportant des valeurs de profondeur pour moins que tous les pixels de l'image ;
**caractérisé par** :
la division de l'image en une grille d'une pluralité de blocs ; et
pour chaque bloc de la pluralité de blocs, la mise à l'échelle (806) de la carte de profondeur prédite de l'image en utilisant les valeurs de profondeur dispersées du bloc respectif.

9. Procédé (800) selon la revendication 8, dans lequel le dispositif de suivi est un dispositif de suivi à six degrés de liberté, 6DOF, dans lequel le dispositif de suivi 6DOF est configuré pour utiliser un algorithme de suivi 6DOF pour générer les valeurs de profondeur sur la base d'une correspondance entre des valeurs des caractéristiques importantes identifiées sur plusieurs images et la résolution du mouvement de la caméra.

10. Procédé (800) selon la revendication 8, dans lequel les images comprennent une ou plusieurs paires d'images stéréo.

11. Procédé (800) selon la revendication 8, comprenant en outre :
la mise à l'échelle de la carte de profondeur prédite en utilisant une valeur représentative des valeurs de profondeur.

12. Procédé (800) selon la revendication 11, comprenant en outre :
la mise à l'échelle de la carte de profondeur prédite associée à l'image en utilisant une première valeur représentative des valeurs de profondeur et une deuxième valeur représentative des valeurs de profondeur prédites de la carte de profondeur prédite.

13. Procédé (800) selon la revendication 12, dans lequel la première valeur représentative comporte une première mesure statistique des valeurs de profondeur ou une deuxième valeur de mesure statistique des valeurs de profondeur, et dans lequel la deuxième valeur représentative comporte une première mesure statistique des valeurs de profondeur prédites de la carte de profondeur prédite ou une deuxième mesure statistique des valeurs de profondeur prédites de la carte de profondeur prédite.

14. Procédé (800) selon la revendication 8, dans lequel la mise à l'échelle (806) de la carte de profondeur prédite comprend en outre :
la détermination d'une carte de profondeur finale sur la base de la multiplication de la carte de profondeur prédite par un facteur d'échelle, dans lequel le facteur d'échelle comporte une relation entre une première valeur représentative des valeurs de profondeur et une deuxième valeur représentative des valeurs de profondeur prédites de la carte de profondeur prédite, dans lequel la première valeur représentative comporte une première mesure statistique des valeurs de profondeur ou une deuxième valeur de mesure statistique des valeurs de profondeur, et dans lequel la deuxième valeur représentative comporte une première mesure statistique des valeurs de profondeur prédites de la carte de profondeur prédite ou une deuxième mesure statistique des valeurs de profondeur prédites de la carte de profondeur prédite.

15. support de stockage non transitoire lisible par ordinateur sur lequel sont stockées des instructions qui, lorsqu'elles sont exécutées par un ou plusieurs processeurs, amènent les un ou plusieurs processeurs à exécuter le procédé selon l'une quelconque des revendications 8 à 14.
